**Europäisches Patentamt**

**European Patent Office**

**Office européen des brevets**

(19)

(11) Veröffentlichungsnummer : **0 527 192 B1**

(12)

# EUROPÄISCHE PATENTSCHRIFT

(45) Veröffentlichungstag der Patentschrift :
**09.03.94 Patentblatt 94/10**

(51) Int. Cl.$^5$ : **B21D 22/16, G05B 19/42**

(21) Anmeldenummer : **91909216.3**

(22) Anmeldetag : **04.05.91**

(86) Internationale Anmeldenummer :
**PCT/EP91/00847**

(87) Internationale Veröffentlichungsnummer :
**WO 91/17004 14.11.91 Gazette 91/26**

(54) **VERFAHREN ZUR STEUERUNG DER UMLAUF-BAHNBEWEGUNGEN DER DRÜCKROLLE EINER DRÜCKMASCHINE UND DRÜCKMASCHINE ZUR DURCHFÜHRUNG DES VERFAHRENS.**

(30) Priorität : **04.05.90 DE 4014405**

(43) Veröffentlichungstag der Anmeldung :
**17.02.93 Patentblatt 93/07**

(45) Bekanntmachung des Hinweises auf die
Patenterteilung :
**09.03.94 Patentblatt 94/10**

(84) Benannte Vertragsstaaten :
**AT BE CH DE ES FR GB IT LI NL SE**

(56) Entgegenhaltungen :
**EP-A- 0 062 685
EP-A- 0 151 976
DE-A- 3 626 495
US-A- 4 907 435
PATENT ABSTRACTS OF JAPAN, Vol. 8, no.
269 (P-319)(1706) 8 December 1984 &
JP-A-59135507 (HITACHI). 3 August 1984**

(73) Patentinhaber : **Schulze, Eckehart
Stahlbühlstrasse 36
D-71287 Weissach (DE)**
Patentinhaber : **Hartmann, Hans
Emser Strasse 14
D-70372 Stuttgart (DE)**

(72) Erfinder : **Schulze, Eckehart
Stahlbühlstrasse 36
D-71287 Weissach (DE)**
Erfinder : **Hartmann, Hans
Emser Strasse 14
D-70372 Stuttgart (DE)**

(74) Vertreter : **Lutz, Johannes Dieter, Dr.
Patentanwälte Wolf & Lutz Hauptmannsreute
93
D-70193 Stuttgart (DE)**

**EP 0 527 192 B1**

## Beschreibung

Die Erfindung betrifft ein Verfahren zur Steuerung der Umlauf-Bahnbewegungen der Drückrolle einer Drückmaschine gemäß dem Oberbegriff des Patentanspruchs 1 sowie eine Drückmaschine nach dem Oberbegriff des Anspruchs 8.

Ein Verfahren der eingangs genannten Art ist der EP-A-0 062 685 entnehmbar. Das bekannte Verfahren ist ein Bahn-Wiederholungs-(Play-back)-Verfahren, wonach in mindestens einem, in aller Regel mehreren, von einem Drückfachmann ausgeführten Muster-Drückprozeß für die hierbei durchlaufenen Positionen der Drückrolle charakteristische Koordinaten-Daten, die mit Hilfe von Positionsgebern ermittelt werden, in einer elektronischen NC- oder CNC-Steuereinheit gespeichert und von dieser zu Ausgabedaten verarbeitet werden, durch deren seriellen Abruf X- und Y-Koordinaten-Antriebseinheiten der Drückmaschine im Sinne einer Verfolgung des im Muster-Drückprozeß ermittelten Bahnverlaufs der Drückrolle ansteuerbar sind. Vorab wird die Kontur des Drückfutters abgetastet und ein für dessen Verlauf charakteristischer Satz von Koordinaten Daten in die NC- bzw. CNC-Steuereinheit eingegeben, aus denen z.B. durch Interpolation, eine Sicherheitskurve ermittelt wird, welche die Grenze der engstmöglichen Annäherung der Drückrolle an das Drückfutter markiert. Bei dem bekannten Verfahren wird hierbei die Kontur der Drückrolle selbst als Sicherheitskurve benutzt.

Um bekannten Bahn-Wiederholungsverfahren, die lediglich mit einer Speicherung der Bahn-Koordinaten unter Ausnutzung derselben als Soll-Daten für die Bahn-Bewegungssteuerung der Drückrolle ausgenutzt werden, anhaftende Nachteile zu vermeiden, die darin gesehen werden, daß schon geringfügige Abweichungen der Form der der Drück-Bearbeitung zu unterwerfenden Ronde von einer Soll-Form dazu führen können, daß eine genaue Verfolgung der gespeicherten Umlauf-Bahnen nicht möglich ist und dadurch Drückteile sehr unterschiedlicher Qualität entstehen können, werden nach dem bekannten Verfahren gemäß der EP-A-0 062 685 zusätzlich zu den Koordinaten-Daten auch für die mit den jeweiligen Koordinaten verknüpften Betriebsdrücke charakteristische Daten gespeichert, die bei den später in Vielfachheit wiederholten Drückprozessen zur Einsteuerung entsprechender Drücke in die Koordinaten-Antriebs-Einheiten - Hydrozylinder - ausgenutzt werden. Das bekannte Verfahren arbeitet somit mit einem dreidimensionalen Satz von Bahn-Verfolgungsdaten, was schon mit einem erheblichen technischen Aufwand verknüpft ist und - wegen der erforderlichen Verarbeitungszeit - mit zusätzlichem Zeitbedarf für den Drückvorgang verbunden ist.

Nachteilig an dem bekannten Verfahren ist weiter, daß sowohl die Erfassung der Betriebsdrücke der Koordinaten-Antriebszylinder während des Muster-Drückprozesses als auch deren Einsteuerung während der zur Herstellung einer größeren Serie möglichst identischer Drückteile durchgeführten Drückprozesse mit erheblichen Fehlern behaftet sein können, was sich in deutlich erkennbaren Qualitätsunterschieden der Oberflächen-Beschaffenheit der solchermaßen hergestellten Drückteile äußern kann. Zwar können durch Ungenauigkeiten der Druckerfassung und -zumessung beim "Erlernen" der Bahnverläufe wie auch bei deren Steuerung bedingte "Streuungen" der Qualität der hergestellten Drückteile dadurch leidlich gering gehalten werden, daß bei der Durchführung des Muster-Drückprozesses darauf geachtet wird, daß die Betriebsdrücke insgesamt konstant gehalten werden, in dem Sinne, daß die auf das Blech-Werkstück wirkenden Kräfte über die verschiedenen Umläufe hinweg weitgehend konstant gehalten werden, was aber erhebliche Anforderungen an den mit der Durchführung des Muster-Drückprozesses betrauten Drück-Fachmann stellt, da dieser während er den Muster-Drückprozess "von Hand" steuert, nicht nur das Werkstück und die Drückrolle, sondern auch die Druckanzeigen für die Koordinaten-Antriebszylinder überwachen muß, was schwierig und anstrengend ist und in aller Regel bedingt, daß ein Muster-Drückprozeß mehrfach durchgeführt werden muß, bis schließlich ein optimaler Satz von Koordinaten- und Druck-Daten ermittelt worden ist. Ein Muster-Drückprozeß, der eine Anwendung des bekannten Verfahrens mit dem Ergebnis ordentlich gleichmäßiger Qualität der Drückteile ermöglicht, ist daher sehr zeitaufwendig und nur unter Einsatz eines hochqualifizierten und sehr erfahrenen Drückfachmanns überhaupt durchführbar.

Zusätzlicher Programmier- und Steuerungsaufwand ist bei einem Arbeiten nach dem bekannten Verfahren auch dann gegeben, wenn zur Abtastung der Außenkontur des Drückfutters als Sicherheitskurve ein üblicher Tastkopf verwendet wird, der eine in zwei zueinander senkrechten Richtungen auslenkbare Tastkugel kleinen Durchmessers umfaßt, die - nach definierten Auslenkhüben - alternativ je einen von zwei Schaltern öffnet, wodurch das Erreichen einer bestimmten Position signalisiert wird, da dann insbesondere bei geringen Materialdicken des fertigen Drückteils schon sehr geringfügige Ungenauigkeiten in der Bahnsteuerung der Drückrolle, deren Krümmungsradius im Abwälzpunkt vom Krümmungsradius der Tastkugel deutlich verschieden sein kann, ausreichen, um unerwünscht hohe relative Abweichungen von der Soll-Dicke des Drückteils zu verursachen.

Aufgabe der Erfindung ist es daher, ein Verfahren der eingangs genannten Art dahingehend zu verbessern, daß sowohl die Durchführung des Muster-Drückprozesses vereinfacht wird und eine Durchführung der zur Herstellung von Drückteilen erforderlichen Drückprozesse mit einfacheren technischen Mitteln steuerbar ist.

Diese Aufgabe wird hinsichtlich des Verfahrens durch die im kennzeichnenden Teil des Patentanspruchs 1 sowie in weiteren Ausgestaltungen durch die Merkmale der Verfahrensansprüche 2 bis 7 und hinsichtlich der zur Durchführung des - erfindungsgemäßen - Verfahrens geeigneten Drückmaschine durch die Merkmale der Patentansprüche 8 und 9 gelöst.

Durch die hiernach vorgesehene Art der Betriebssteuerung der Koordinaten-Antriebseinheiten nach einem mit elektrisch gesteuerter Positions-Sollwert-Vorgabe und mechanischer Positions-Istwert-Rückmeldung arbeitenden Nachlauf-Regelverfahren, das die Überwachung des Nachlauf-Weges - des sogenannten Schleppfehlers - der Koordinaten-Antriebseinheiten ermöglicht und die Überwachung dieses Nachlaufweges, dessen Anwachsen über einen Schwellenwert $\Delta S_{max}$ ein Indiz dafür ist, daß die zur Verformung des Werkstück-Materials erforderlichen Kräfte größer werden als es für eine "glatte" Verformung des Materials günstig ist sowie die durch ein Überschreiten dieses Schwellenwertes dieses Nachlaufweges ausgelösten Maßnahmen der Erniedrigung der Bahnverfolgungsgeschwindigkeit der Drückrolle und/oder des Übergangs zu einer Bahnverlaufs-Kurve der Drückrolle, die einer Vergrößerung des normal zur Außenkontur des Drückfutters gemessenen Abstandes des Drückrollen-Abwälzpunktes gegenüber dessen zuvor maßgeblichem SollwertVerlauf entspricht bis wieder ein mit guter Qualität des herzustellenden Drückteiles verträglicher Wert des Nachlaufweges erreicht ist, wird auf einfache Weise eine Bahnsteuerung der Drückrolle erzielt, die selbst dann, wenn im Muster-Drückprozeß nur ein annähernd optimaler Bahnverlauf ermittelt worden ist, zu einer schonenden Bearbeitung des Werkstückes und damit im Ergebnis auch zu einer guten Qualität seiner Oberflächenbeschaffenheit führt, die mit guter Reproduzierbarkeit erreicht werden kann. Der "Lernvorgang" kann daher mit wesentlich geringerem Zeitaufwand erfolgen.

Durch die Ausnutzung der Drückrolle als "Tastkopf" wird auf einfache Weise sichergestellt, daß bei Ausnutzung der mit ihrer Anlage an den Abtast-Stützstellen verknüpften Positions-Koordinaten als "Sicherheitskurve" möglicherweise fehlerbehaftete Umrechnungsvorgänge vermieden werden, d.h. die Gefahr, daß bei sehr dünnen Materialdicken eines herzustellenden Drückteils die Sicherheitskurve "überschritten" werden könnte mit der Folge einer Beschädigung des Drückfutters, zuverlässig ausgeschlossen wird.

In Kombination hiermit können dank der - erfindungsgemäß - vorgesehenen Art der Betriebssteuerung der Koordinaten-Antriebseinheiten, deren Antriebszylinder auch, wie gemäß Anspruch 2 näher spezifiert, für das Abtasten der Außenkontur des Drückfutters ausgenutzt werden.

Die gemäß Anspruch 3 vorgesehene Verfahrensweise erlaubt es, in wenigen Schritten der Bahnkorrektur einen optimalen Verlauf der Bewegungsbahn der Drückrolle zu erzielen. In Kombination mit einer selbsttätigen Steuerung dieser Verfahrensvariante ist ohne weiteres eine "Selbstprogrammierung" der elektronischen Steuereinheit möglich, die zu einem optimalen Bahnverlauf für die Drückrolle sowohl in Vordrück-Vorgängen als auch in einem abschließenden Drückprozeß führt.

Es ist dann auch möglich, wie gemäß Anspruch 4 vorgesehen, den Soll-Verlauf einer Kontur des Drückteils, an der sich die Drückrolle abwälzt, allein durch deren numerische Vorgabe zu bestimmen.

Die gemäß Anspruch 5 vorgesehene Sicherheitsmaßnahme gewährleistet einen optimalen Schutz des Drückfutters.

Durch die Merkmale des Anspruchs 6 ist eine Art der Abtastung der Außenkontur des Drückfutters mittels der Koordinaten-Antriebseinheit angegeben, die auch Daten über die Entwicklung des Nachlauf-Weges entlang der Bahnverfolgungskurven liefert, die auf einfache Weise dahingehend ausgewertet werden können, beim Drückvorgang einen konstanten oder nahezu konstanten Betrag des Nachlaufweges einhalten zu können, was wiederum auf einfache Weise die Möglichkeit beinhaltet, die Bewegungssteuerung der Drückrolle in Abhängigkeit von im wesentlichen einem Wert eines maximalen Nachlaufweges $\Delta S_{max}$ zu steuern.

Entsprechendes gilt sinngemäß für die gemäß Anspruch 7 vorgesehene, hierzu alternative Verfahrensweise der Erfassung des Nachlaufweges und dessen Auswertung im Hinblick auf eine Steuerung des Bahnverlaufes mit im wesentlichen konstantem Nachlaufweg.

In der gemäß Anspruch 8 vorgesehenen Gestaltung einer zur Durchführung des erfindungsgemäßen Verfahren geeigneten Drückmaschine kann die Überwachung von Grenzwerten des Nachlaufweges auf einfache Weise, z.B. mit Hilfe von Endlagen-Schaltern erfolgen, die ab einer Mindest-Auslenkung $\epsilon$ der Ventilbetätigungsglieder der Nachlauf-Regelventile der Koordinaten-Antriebseinheiten ansprechen.

Es ist aber auch eine kontinuierliche Erfassung des Nachlaufweges möglich, so daß für verschiedene Phasen des Drückprozesses auch verschiedene Grenzwerte des Nachlaufweges gewählt werden können, bei deren Überschreiten Änderungen der Bahnverfolgungsgeschwindigkeit und/oder Änderungen der Bahngeometrie ausgelöst werden können .

Für den Fall, daß zur Herstellung eines Drückteils mehrere Drückrollen mit unterschiedlicher Geometrie ihrer Abwälzschultern vorgesehen sind, ist es vorteilhaft, wenn das Drückfutter mit jeder dieser verschiedenen Drückrollen abgetastet und somit für jede dieser Drückrollen gleichsam eine eigene Sicherheitskurve ermittelt

EP 0 527 192 B1

wird.

Weitere Einzelheiten und Merkmale des erfindungsgemäßen Verfahrens und einer zu seiner Durchführung geeigneten Drückmaschine ergeben sich aus der nachfolgenden Beschreibung eines speziellen Ausführungsbeispiels einer solchen Drückmaschine anhand der Zeichnung und der Erläuterung ihrer Funktion. Es zeigen:

Fig. 1    Eine Ausführungsbeispiel einer erfindungsgemäßen Drückmaschine mit elektrohydraulischen X- und Y-Koordinaten-Antriebseinheiten, in vereinfachter, schematischer Draufsicht,

Fig. 2    die X-Koordinaten-Antriebseinheit der Drückmaschine gemäß Fig. 1 in ebenfalls vereinfachter, schematischer Schnittdarstellung,

Fig. 3    die Anordnung des Drückfutters und der Drückrolle der Drückmaschine gemäß Fig. 1 in vergrößertem Maßstab, zur Erläuterung der Funktion der Drückmaschine und

Fig. 4 und 5    verschiedene Anordnungen der Drückrolle und des Drückfutters gemäß Fig. 1 zueinander zur Erläuterung von Abtast-Vorgängen und Phasen der Bewegungssteuerung der Drückrolle der Drückmaschine gemäß Fig. 1.

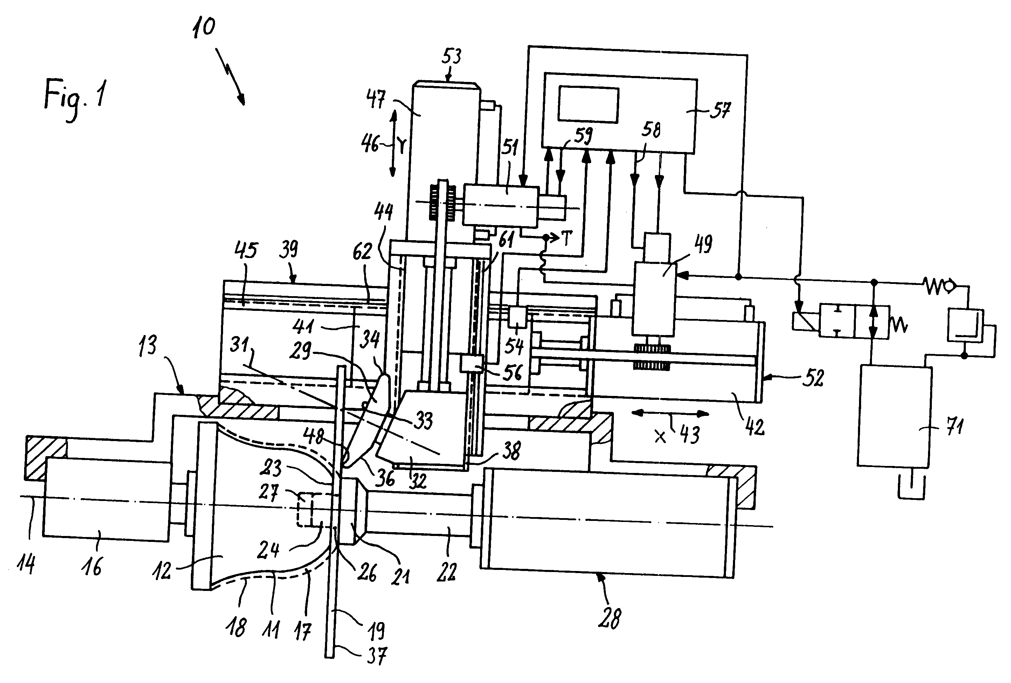

Die in der Fig. 1, auf deren Einzelheiten ausdrücklich verwiesen sei, dargestellte Drückmaschine 10 ist in der dargestellten, speziellen Gestaltung für die Herstellung eines rotationssymmetrischen, glockenförmigen Hohlkörpers geeignet, dessen Innenkontur durch die Außenkontur 11 eines Drückfutters 12 bestimmt wird, das an dem lediglich schematisch angedeuteten, Maschinengestell 13 um eine horizontale Achse 14 drehbar gelagert ist und mittels eines elektrischen oder hydraulischen Antriebsmotors 16 rotierend antreibbar ist.

Das Drückteil 17, dessen endgültige Außenkontur 18 in der Fig. 1 gestrichelt eingezeichnet ist, wird aus einem ursprünglich ebenen, kreisscheiben- bzw. kreisringförmigen Blech-Zuschnitt 19, einer sogenannten Ronde hergestellt, die mittels eines Gegenhalters 21, der, um die horizontale Achse 14 drehbar an einer Pinole 22 gelagert ist, an die dem Gegenhalter 21 zugewandte ebene Stirnfläche 23 des Drückfutters 12 angepreßt und reibungsschlüssig an dieser gehalten, so daß die Ronde 19 während des Drückvorganges die Drehbewegungen des Drückfutters 12 mit ausführt.

Der Gegenhalter 21 ist mit einem Zentrierzapfen 24 versehen, der durch eine Zentrierbohrung 26 gleichen Durchmessers der Ronde 19 hindurchtritt und in eine Sackbohrung 27 ebenfalls gleichen Durchmessers des Drückfutters 12 hineinragt. Die Pinole 22 ist mittels eines hydraulischen Linearzylinders 28 entlang der horizontalen Achse 14 verschiebbar, dadurch der Gegenhalter 21 an die Ronde 19 und diese an das Drückfutter 12 mit hinreichender Kraft anpreßbar.

Als Drückwerkzeug ist beim dargestellten Ausführungsbeispiel der Drückmaschine 10 eine kegelstumpfförmige Drückrolle 29 vorgesehen, die um eine ebenfalls horizontale, zur Drehachse 14 des Drückfutters 12 unter einem spitzen Winkel von etwa 25° verlaufende Achse 31 frei drehbar an einem stabilen Lagerblock 32 gelagert ist, derart, daß die dem Durchmesser nach größere Basisfläche 33 der Drückrolle 29 zu der Ronde 19 hinweisend angeordnet ist und die Drückrolle 29 sich mit dem konvex gewölbten Randbereich 34, über den diese größere Basisfläche 33 in die konische Mantelfläche 36 anschließt, an der dem Drückfutter 12 abgewandten - äußeren - Fläche 37 der Ronde 19 abwälzen kann.

Der Lagerblock 32, an dem die Drückrolle 29 drehbar gelagert ist, ist an den Querschlitten 38 eines insgesamt mit 39 bezeichneten Kreuzschlitten-Support befestigt, dessen Längsschlitten 41 mittels eines X-Koordinaten-Antriebsmotors 42 parallel zur Drehachse 14 hin- und her-verschiebbar ist. Die diesbezüglichen Verschieberichtungen sind durch den die X-Koordinatenrichtung repräsentierenden Doppelpfeil 43 veranschaulicht.

Der beim dargestellten Ausführungsbeispiel als oberer Schlitten des Kreuzschlittens 39 ausgebildete Querschlitten 38 ist in seiner Schlittenführung 44 rechtwinklig zur Drehachse 14 des Drückfutters 12, d.h. in der durch den Doppelpfeil 46 markierten Y-Koordinatenrichtung hin- und her-verschiebbar geführt. Ein zum diesbezüglichen Antrieb vorgesehener Y-Koordinaten-Antriebsmotor, der die Bewegungen des Längsschlittens 41 mit ausführt, ist mit 47 bezeichnet.

Der Kreuzschlitten 39 ist bezüglich der Anordnung des Drückfutters 12 derart am Maschinengestell 13 festgelegt, daß sich bei einer in Y-Koordinatenrichtung 46 erfolgenden Bewegung der Drückrolle 29 deren Abwälzpunkt 48 an der Außenfläche 37 der Ronde 19 genau radial zur Drehachse 14 des Drückfutters 12 bzw. der Ronde 19 bewegt.

Die Koordinaten-Antriebs-Motoren 42 und 47 sind, wie auch der Spannzylinder 28, mittels dessen der Gegenhalter 21 an die Ronde 19 andrückbar und diese dadurch am Drückfutter 12 festlegbar ist, als hydraulische Linearzylinder ausgebildet.

Zur Steuerung der - bei rotierendem Drückfutter 12 - zur Drück-Bearbeitung des rondenförmigen Werkstückes 19 erforderlichen Bewegungsbahnen der Drückrolle 29, die sich aus der Überlagerung der X- und Y-Kolbenhübe der Linearzylinder 42 und 47 ergeben, sind diesen je einzeln zugeordnete Nachlauf-Regelventile 49 und 51 zugeordnet, die mit elektromechanisch steuerbarer Positions-Sollwert-Vorgabe und mechanischer

4

Positions-Istwert-Rückführung für die beweglichen Elemente - die Kolben - der beiden Linearzylinder 42 und 47 arbeiten.

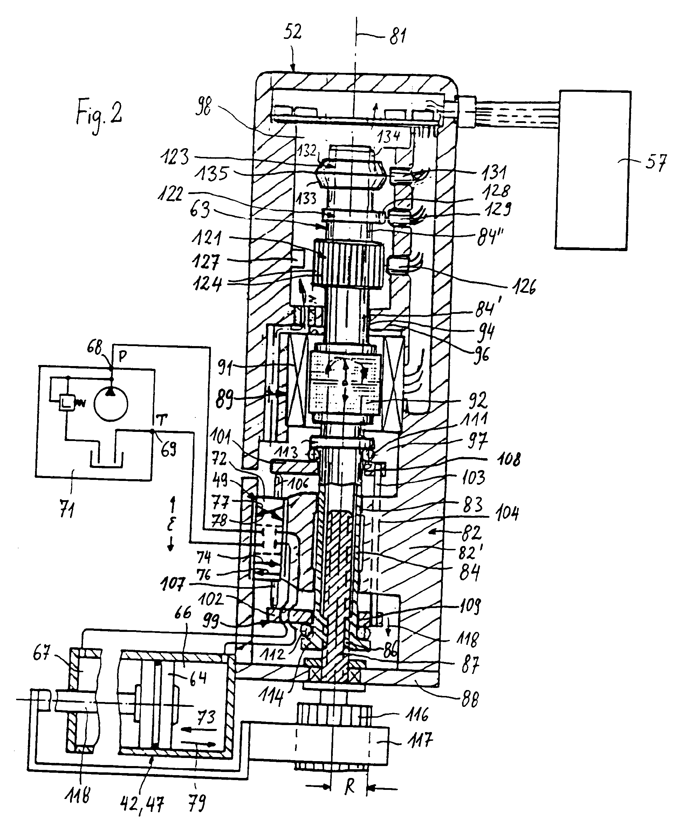

Die je einen Linearzylinder 42 bzw. 47 und ein Nachlauf-Regelventil 49 und 51 umfassenden, insgesamt mit 52 bzw. 53 bezeichneten Koordinaten-Antriebseinheiten werden, der Vollständigkeit halber hinsichtlich ihres prinzipiellen Aufbaus und ihrer Funktion anhand der Fig. 2 näher erläutert:

Die Koordinaten-Antriebseinheiten 52 und 53 sind mit je einem Positionsgeber 54 bzw. 46 versehen, welche für die Positionen des Längsschlittens 41 und des Querschlittens 38 charakteristische - elektrische - Ausgangssignale erzeugen, die als Eingaben einer elektronischen CNC-Steuereinheit 57 zugeleitet sind, welche an Steuer-Ausgängen 58 und 59 die Positions-Sollwert-Vorgabe-Signale für die Nachlauf-Regelventile 49 und 51 der Antriebseinheiten 52 und 53 abgibt, durch deren Linearbewegungen die Bahnbewegung der Drückrolle 29 gesteuert wird.

Die Positionsgeber 54 und 56 sind in bevorzugter Gestaltung als sogenannte Absolut-Geber ausgebildet, deren - in digitalem Format abgegebene - Ausgangssignale ein direktes Maß für die auf - maschinenfeste - Grundstellungen des Längsschlittens 41 und des Querschlittens 38 bezogene Momentan-Positionen des Längsschlittens 41 bzw. des Querschlittens 38 sind. Eine derartige Ausbildung der Positionsgeber 54 und 56 als Absolut-Geber setzt allerdings voraus, daß entlang der Schlittenführungen 44 bzw. 45 des Querschlittens 38 bzw. des Längsschlittens 41, z.B. innerhalb streifenförmiger Bereiche 61 bzw. 62 von den Positionsgebern 54 bzw. 56, die in diesem Falle als Leseköpfe ausgebildet sind, beim Überfahren erkennbare Markierungen angeordnet sind, in deren geometrische Anordnung der jeweilige Y- bzw. X-Koordinatenwert codiert ist, die durch die Positionsgeber 54 und 56 "erkannt" und in impulsförmige elektrische Ausgangssignale umgewandelt werden, die ihrerseits in der elektronischen CNC-Steuereinheit 57 als Koordinatenwerte verarbeitet werden. Diese Markierungen, die der Einfachheit halber nicht dargestellt sind, können in für sich bekannter Technik als optisch abtastbare oder als induktiv abtastbare Markierungen oder Markierungsgruppen realisiert sein.

Anstelle von Absolut-Gebern können als Positionsgeber 54 und/oder 56 auch Inkremental-Geber verwendet werden, die für den Änderungssinn - vorwärts/rückwärts - und für inkrementale Beträge der Positionsänderung charakteristische Signale - Impulsfolgen - abgeben, durch deren addierende bzw. subtrahierende Verarbeitung in der CNC-Steuereinheit 57 ebenfalls die Positions-Information über die Anordnung der Drückrolle 29 relativ zu dem Drückfutter 12 der Drückmaschine 10 mit hinreichender Zuverlässigkeit gewinnbar ist.

Im Rahmen der Drückmaschine 10 geeignete Positionsgeber 54 und 56 beider Typen sind in vielfältigen Ausführungsarten bekannt und erscheinen daher nicht weiter erläuterungsbedürftig.

Entsprechendes gilt sinngemäß für den Aufbau der hydraulischen Linearzylinder 42 und 47 der Kooridnaten-Antriebseinheiten 52 und 53 sowie für Aufbau, Funktion und Art der Ansteuerung der Nachlauf-Regelventile 49 und 51 der beiden Koordinaten-Antriebseinheiten 52 und 53, wobei deren Nachlauf-Regelventile 49 sich von vorbekannten Ventilen dieser Art dadurch unterscheiden, daß sie, je für sich, mit einem insgesamt mit 63 bezeichneten Mess-System zur Erfassung des Positions-Sollwertes sowie zur Überwachung des Nachlauf-Weges ΔS ausgerüstet sind, um den der Kolben 64 des-jeweiligen Linearzylinders 42 bzw. 47 der X-Antriebseinheit 52 bzw. der Y-Antriebseinheit 53 dem Positions-Sollwert, der durch Ausgangssignale der CNC-Steuereinheit 57 eingesteuert wird, während der Bearbeitung des Werkstückes 19 nacheilt.

Der Vollständigkeit halber werden daher anhand der Fig. 2, auf deren Einzelheiten nunmehr Bezug genommen sei, am Beispiel der X-Koordinaten-Antriebseinheit 52 eine spezielle Gestaltung deren Nachlauf-Regelventils 49 und des mit diesem gekoppelten Meßsystems 63 erläutert, die bei der Y-Koordinaten-Antriebseinheit 53 auf identische oder äquivalente Weise realisiert sind.

Das Nachlauf-Regelventil ist als 4/3-Wege-Ventil ausgebildet, dessen "neutrale" Grundstellung 0 seine Sperrstellung ist, in welcher beide Antriebsdruckräume 66 und 67 des Linearzylinders 42 des X-Koordinatenantriebs 52 sowohl gegen den P-Versorgungsanschluß 68 als auch den Druck(P)-Ausgang als auch gegen den Tank(T)-Anschluß des Druckversorgungsaggregates 71 abgesperrt sind.

Das Nachlauf-Regelventil 49, das - zum Zweck der Erläuterung - gemäß der halbschematischen Darstellung der Fig. 2 als Schieber-Ventil vorausgesetzt ist, dessen "Kolben" 72 durch das 4/3-Wege-Ventil-Symbol repräsentiert ist, ist als Poportionalventil ausgebildet, das, von seiner sperrenden Grundstellung 0 aus gesehen, mit einer zunehmenden Verschiebung seines Ventilkolbens 72, gemäß der Darstellung der Fig. 2 nach "unten", d.h. im Sinne einer Beaufschlagung des Hydrozylinders 42 in Richtung des Pfeils 73 nach "links", d.h. in der nachfolgend als Vorwärtsrichtung bezeichneten Bewegungsrichtung, zunehmend größere Querschnitte der Durchflußpfade 74 und 76 freigibt und bei einer zunehmenden Verschiebung seines Ventilkolbens 72 in der Gegenrichtung, gemäß der Darstellung der Fig. 2 nach "oben" zunehmend größere Querschnitte der Druchflußpfade 77 und 78 freigibt, wobei sich in dieser Funktionsstellung des Ventilkolbens 72 der Kolben 64 des Linearzylinders 42 in Richtung des Pfeils 79 bewegt, die nachfolgend als "Rückwärtsrichtung" bezeichnet wird.

Die mit der "Vorwärtsrichtung" verknüpfte Funktionsstellung des Nachlauf-Regelventils wird mit I bezeichnet, die mit der Rückwärtsrichtung verknüpfte Funktionsstellung mit II.

Um das insoweit erläuterte Nachlauf-Regelventil 49 im Sinne der Bewegungssteuerung des Kolbens 64 des Linearzylinders 42 und des mit diesem in der X-Richtung angetriebenen Werkstückes 19 bedarfsgerecht in seine verschiedenen Funktionsstellungen 0 und I bzw. II steuern zu können, sind weiter die folgenden Funktionselemente vorgesehen:

In einer zentralen, mit der Längsachse 81 des Ventilgehäuses 82 koaxialen Bohrung 83 ist drehbar und axial verschiebbar eine Hohlwelle 84 gelagert, die an ihrem einen, gemäß der Darstellung der Fig. 2 unteren Endabschnitt mit einem Innengewinde 86 versehen ist, über das sie mit dem Außengewinde einer zentralen Gewindespindel 87 kämmt, welche an einem die untere Endstirnwand des Gehäuses 82 bildenden Abschlußplatte 88 des Ventilgehäuses 82 drehbar, jedoch axial unverrückbar gelagert ist.

Die Hohlwelle 84 ist - zur Vorgabe des Positions-Sollwertes des Antriebskolbens 64 des Linearzylinders 42 - mittels eines insgesamt mit 89 bezeichneten Elektromotors - eines Schrittmotors oder eines AC-Motors - antreibbar, dessen Stromversorgung im Sinne der Positions-Sollwert-Vorgabe durch elektrische Ausgangssignale der elektronischen CNC-Steuereinheit 57 gesteuert wird.

Dieser Elektromotor hat beim dargestellten, speziellen Ausführungsbeispiel einen gehäusefest angeordneten Stator 91 und einen axial hin- und her-verschiebbaren Rotor 92, dessen Rotorwelle durch einen Abschnitt der Hohlwelle 84 gebildet ist, welche solchermaßen dreh- und verschiebefest mit dem Rotor 92 des Elektromotors 89 verbunden ist. Der Rotor 92 des Elektromotors 89 ist mittels des die zentrale Bohrung 83 des Ventilgehäueses 82 axial durchsetzenden Abschnittes der Hohlwelle 84 einerseits und andererseits mit einem weiterführenden Abschnitt 84' der Hohlwelle 84 in einer zentralen, mit der Längsachse 81 koaxialen Bohrung 94 einer Zwischenwand 96 des Gehäuses 82 drehbar gelagert, welche den im wesentlichen von dem Motor 89 und dem Nachlauf-Regelventil 49 eingenommenen Raum 97 gegen einen für die Aufnahme des Meßsystems 63 vorgesehenen Gehäuseraum 98 abgrenzt.

In dem das Nachlauf-Regelventil 49 aufnehmenden Teil 82' des Gehäuses 82 ist axial verschiebbar, jedoch unverdrehbar ein insgesamt mit 99 bezeichnetes, der Grundform nach jochförmiges Ventilbetätigungsglied gelagert, das zwei parallel zueinander Verlaufende Jochschenkel 101 und 102 hat, die durch einen parallel zur zentralen Längsachse 81 des Gehäuses 82 verlaufenden Führungsstab 103, der durch eine radial seitliche Führungsbohrung 104 des insgesamt blockförmigen Ventilgehäuseteils 82' hindurchtritt, fest miteinander verbunden sind und sich über je einen Betätigungsstift 106 bzw. 107 axial an den einander gegenüberliegenden Seiten des Ventilkolbens 72 abstützen, wobei die Abstützung der Jochschenkel 101 und 102 sattformschlüssig ist.

Die beiden Jochschenkel 101 und 102 haben miteinander fluchtende, mit der zentralen Längsachse 81 des Gehäuses 82 koaxiale Bohrungen 108 und 109, deren Durchmesser geringfügig größer ist als der Außendurchmesser der Hohlwelle 84, so daß diese mit einem für ihre leichtgängige Drehbarkeit hinreichenden Spiel durch diese Bohrungen 108 und 109 der Jochschenkel 101 und 102 des Ventilbetätigungsgliedes 99 hindurchtreten kann.

Das Ventilbetätigungsglied 99 ist über Kugellager 111 und 112, die eine leichtgängige Drehbarkeit der Hohlwelle 84 relativ zu dem Ventilbetätigungsglied 99 vermitteln, axial spielfrei zwischen radialen Mitnahmeflanschen 113 und 114 der Hohlwelle 84 gelagert.

Die Gewindespindel 87 ist an einem freien, außerhalb des Gehäuses 82' angeordneten Endabschnitt mit einem Ritzel 116 versehen, mit dem eine Zahnstange 117 kämmt, welche mit dem Kolben 64 des hydraulischen Linearzylinders 42 bewegungsgekoppelt ist und dessen Vorwarts- und Rückwärtsbewegungen mit ausführt.

Zum Zweck der Erläuterung der Funktion der insoweit dem Aufbau nach beschriebenen Komponenten der Koordinaten-Antriebseiheit 52 sei zunächst angenommen, daß der Linearzylinder 42, ausgehend von einer Ruhelage, in weicher das Nachlauf-Regelventil 49 seine Sperrstellung 0 einnimmt, eine in Richtung des Pfeils 79 erfolgende "Vorwärts"-Bewegung ausführen soll. Hierzu wird der als Motor mit umkehrbarer Drehrichtung ausgebildete Elektromotor 89 - gesteuert durch Ausgangimpulse der CNC-Steuereinheit 57 - mit derjenigen Drehrichtung angetrieben, daß sein Rotor 92 und mit diesem die Hohlwelle 84 - wegen deren Gewinde-Eingriff mit der zunächst in Ruhe bleibenden Gewindespindel 87 - eine axiale Verschiebung in Richtung des Pfeils 118, gemäß der Darstellung der Fig. 2 "nach unten" erfährt, die über das Ventilbetätigungsglied 99, das diese einleitende Verschiebung der Hohlwelle 84 mit ausführt, auch auf den Ventilkolben 72 des Nachlauf-Regelventils 49 übertragen wird, welches dadurch in seine dem Vorwärts-Betrieb des Hydrozylinders 42 zugeordnete Funktionsstellung I gelangt. Durch die hieraus resultierende - zunehmende - Druckbeaufschlagung des einen, gemäß Fig. 2 rechten Antriebsdruckraumes 66 des Linearzylinders 42 und gleichzeitige Druckentlastung seines anderen, gemäß Fig. 2 linken Antriebsdruckraumes 67 erfährt der Kolben 64 des Linearzylinders 42 nunmehr eine Verschiebung in Vorwärtsrichtung 73, die sich wegen des formschlülssig-kämmenden Eingriffes der die Bewegungen des Kolbens 64 mit ausführenden Zahnstange 117 mit dem Ritzel 116 zu einer mit der Drehrichtung der Hohlwelle 84 gleichsinnig gerichteten Drehbewegung der Gewindespindel 87 führt. Nach einem nur eine kurze Zeitspanne benötigenden "Einschwingen" der Regelung ergibt sich ein stationärer Zustand, in welchem die Hohlwelle 84 und die Gewindespindel 87 gleiche Drehzahl haben und damit axiale Verrückungen dieser beiden Elemente 84 und 87 gegeneinander aufhören, dies jedenfalls dann, wenn die Frequenz der Ansteuerimpulse konstant gehalten wird und der Kolben 64 des Linearzylinders 42 seine Vorwärtsbewegung mit konstanter Geschwindigkeit aufführt. In diesem stationären, d.h. konstanter Geschwindigkeit der Kolbenbewegung entsprechenden Betriebszustand der Koordinaten-Antriebseinheit 52 ist somit das Ventilbetätigungsglied 99 "in Ruhe" und das Nachlauf-Regelventil 49 in seiner Funktionsstellung I so weit geöffnet, daß der Öl-Volumenstrom dV/dt, der in den druckbeaufschlagten Antriebsdruckraum 66 des Linearzylinders 42 eingeleitet bzw. aus dessen druckentlastetem Antriebsdruckraum 67 abgeführt wird, genau den Wert F · dS/dt hat, wobei mit F der Wert der druckbeaufschlagten Fläche des Kolbens 64 und mit dS/dt die Vorschubgeschwindigkeit in Richtung des Pfeils 73 bezeichnet sind.

Die Wirkunsweise der Koordinaten-Antriebseinheit 52 im Rückwärtsbetrieb des Linearzylinders 42 - bei Ansteuerung des Elektromotors 89 in der entgegengesetzten Drehrichtung - ist analog, wobei lediglich die wirksame Querschnittsfläche des Kolbens 64 beim dargestellten, speziellen Ausführungsbeispiel um die Querschnittsfläche der Kolbenstange 118 kleiner ist, mit der die Zahnstange 117 fest verbunden ist. In dem im vorstehend erläuterten Sinne stationären Betriebszustand der Antriebseinheit 52 besteht Gleichheit von Ist- und Sollwert der Bewegungsgeschwindigkeit des Kolbens 64. Zwischen dem jeweils momentan maßgeblichen Sollwert der Position des Kolbens 64 und deren Istwert besteht jedoch ein Unterschied $\Delta S$, der sogenannte Nachlaufweg, der zu dem für die Aufrechterhaltung des stationären Zustandes erforderlichen Auslenkungshub des Nachlauf-Regelventilkolbens 72 aus seiner Grundstellung 0 proportional ist und beim dargestellten Ausführungsbeispiel durch die Beziehung

$$\Delta S = \varepsilon \cdot i$$

gegeben ist, wobei mit i der Übersetzungsfaktor des Zahnstangentriebes 116, 117 bezeichnet ist, der beim dargestellten, speziellen Ausführungsbeispiel durch das Verhältnis R/r des wirksamen Radius R des Zahnritzels 116 zum Radius r der Gewindespindel 87 gegeben ist.

Um diesen Nachlaufweg $\Delta S$ eilt der Positions-Istwert des Kolbens 64 dem eingesteuerten Positions-Sollwert im stationären Betriebszustand nach.

Das Meßsystem 63 umfaßt insgesamt drei, der Grundform nach im wesentlichen rotationssymmetrische Geberelemente 121, 122 und 123, die mit der aus der Fig. 2 ersichtlichen Anordnung in axialem Abstand voneinander dreh- und verschiebefest auf dem in den Aufnahmeraum 98 hineinragenden Endabschnitt 84" der Hohlwelle 84 angeordnet sind. Das erste mechanische Geberelement 121 hat die Form eines Zahnrades mit parallel zur zentralen Längsachse 81 der Hohlwelle 84 verlaufenden Zähnen 124, die beim Vorbeitreten an gehäusefest angeordneten elektronischen Sensorelementen 126 und 127 impulsförmige Wechselspannungs-Ausgangssignale dieser Sensorelemente 126 und 127 auslösen, d.h. Folgen von zwischen einem maximalen und einem minimalen Pegel variierenden Spannungsimpulsen, der Impulsform bei vorgegebener Drehzahl der Hohlwelle 84 bzw. des Rotors 92 des Elektromotors 89 in sehr guter Näherung einer Sinuswelle entspricht.

Als Sensorelemente 126 und 127 sind sogenannte Feldplattenfühler für sich bekannter Bauart ausgenutzt, bei denen die Amplituden der Ausgangssignale unabhängig von der Drehgeschwindigkeit des mechanischen Geberelementes 121 sind, d.h. der Signalpegel ihrer Ausgangssignale zwischen definierten - oberen und unteren - Extremwerten variiert, so daß die Ausgangssignale der beiden Sensorelemente 126 und 127 auch dem Pegel nach gut auswertbar sind.

Die beiden Sensorelemente 126 und 127 sind in einem solchen azimutalen Abstand $\Delta\varphi$ voneinander angeordnet, daß zwischen ihren Ausgangssignalen eine Phasenverschiebung von 90° bzw. einem ungeradzahligen vielfachen von 90° besteht, so daß aus einer fortlaufenden Überwachung des zeitlichen Verlaufs der Ausgangssignale der beiden Sensorelemente 126 und 127 und der zeitlichen Änderungen (zeitlichen Differentialquotienten) derselben auch der Drehsinn der Hohlwelle 84 erfaßt werden kann.

Diese Auswertung der Sensor-Ausgangssignale erfolgt nach bekannten Algorithmen in der elektronischen CBC-Steuereinheit 57, der die Ausgangssignale der beiden Sensorelemente 126 und 127 zugeleitet sind.

Das zahnradförmige Geberelement 121 und die diesem zugeordneten Sensorelemente 126 und 127 bilden somit ein Winkelstellungs-Meßsystem, dessen Genauigkeit umso größer ist, je größer die Zahl der über den Umfang des Geberelementes 121 äquidistant verteilten Zähne 124 ist, und je höher die Genauigkeit ist, mit der die Ausgangssignalamplituden der beiden Sensorelemente 126 und 127 gemessen werden können. Die diesbezügliche Meßgenauigkeit erlaubt es, den Winkelabstand zweier aufeinander folgender Zähne auf 1/100 seines Betrages genau zu erfassen.

Das zweite mit der Hohlwelle 84 rotierende mechanische Geberelement 122 ist als ringflanschförmiges Element ausgebildet, das an seinem Umfang nur einen einzigen, z.B. V-förmigen Schlitz oder einen spitzen Vorsprung 128 aufweist, durch dessen Vorbeitreten an einem diesem Geberelement 122 zugeordneten, gehäusefest angeordneten elektronischen Sensorelement 129 jeweils ein Referenzimpuls ausgelöst wird.

Durch das Auftreten des Referenzimpulses dieses elektronischen Sensorelements 129, dessen Aufbau demjenigen der Sensorelemente 126 und 127 des Winkelstellungs-Meßsystems 121, 126, 127 analog ist, wird gleichsam eine Referenzebene markiert, auf welche die mittels der beiden Sensorelemente 126 und 127 innerhalb einer Umdrehung der Hohlwelle 84 erfaßbaren Winkelstellungen dieser Hohlwelle 84 bezogen werden können. Durch die bei einer bestimmten Drehrichtung der Hohlwelle 84 auftretenden Winkelstellungs- und Umdrehungszahl-Impulse, die von den Sensorelementen 126 und 127 sowie gegebenenfalls 129 abgegeben werden, ist somit auf einfache Weise die Positions-Sollwert-Vorgabe für den Antriebskolben 64 des Hydrozylinders 42 kontrollierbar, d.h. mittels des Winkelstellungsmeßsystems 121, 126, 127 und des Referenz-Meßsystems 122, 129 ist der eingesteuerte Positions-Sollwert bzw. X-Koordinaten-Sollwert, im Falle der Antriebseinheit 53 der Y-Koordinaten-Sollwert erfaßbar.

Das zahnradförmige Geberelement 121 und das ringflanschförmige Geberelement 122 sowie die diesen zugeordneten elektronischen Sensorelemente 126 und 127 bzw. 129 sind so angeordnet und gestaltet, daß die Ausgangssignale mindestens der beiden Sensorelemente 126 und 127 des Winkelstellungs-Meßsystems 121, 126, 127 durch die im Betrieb möglichen axialen Verschiebungen der Hohlwelle 84 und damit auch der Geberelemente 121 und 122 nicht beeinflußt werden, da die Ausgangssignale der beiden Sensorelemente 126 und 127 auch hinsichtlich der Beträge ihrer Amplituden (Signalpegel) möglichst genau auswertbar sein sollen.

Für das Referenz-Meßsystem 122, 129 ist dies nicht zwingend erforderlich, gleichwohl ist es auch hier zweckmäßig, wenn die Amplituden der von dem Sensorelement 129 erzeugten Ausgangssignale zumindest nicht drastisch mit axialen Verrückungen des ringflanschförmigen Geberelements 122 variieren.

Im Unterschied dazu ist das das dritte rotierende Geberelement 123 und mindestens ein weiteres, ebenfalls gehäusefest angeordnetes elektronisches Sensorelement 131 umfassende Teilsystem des Meßsystems 63 so gestaltet, daß der Ausgangssignalpegel der von dem Sensorelement 131 dieses Teilsystems 123, 131 ezeugten Ausgangssignale signifikant und in einer möglichst exakt linearen Relation mit axialen Verrückungen des Geberelementes 123 bzw. der Hohlwelle 84 variiert, um aus der diesbezüglichen Variation bzw. dem jeweiligen Pegel des Ausgangssignals des Sensorelements 123 den im Betrieb der Koordinaten-Antriebseinheit 52 jeweils maßgeblichen Nachlaufweg ΔS mit hinreichender Genauigkeit bestimmen zu können.

Zu diesem Zweck ist in der der Fig. 2 entnehmbaren, einfachen Gestaltung des Nachlaufweg-Meßsystems 123, 131 dessen mechanisches Geberelement 123 als eine Ringrippe mit konischen Flanken 132 und 133 ausgebildet, die entlang einer scharfen Ringkante 134 aneinander anschließen, durch deren axiale Verrückungen relativ zu dem Sensorelement 131 dessen Ausgangssignalpegel definiert beeinflußt wird.

Als Sensorelement 131 ist wiederum ein Element desjenigen Typs vorgesehen, wie für das Winkelstellungs-Meßsystem 121, 126, 127 schon erläutert. Im Sinne einer einfachen Auswertbarkeit des Pegels der Ausgangssignale des Sensorelements 131 in Einheiten des Nachlaufweges ΔS ist es günstig, wenn mit der - sperrenden - Grundstellung 0 des Nachlauf-Regelventils 49 eine Position des mechanischen Geberelements 123 verknüpft ist, in der das Ausgangssignal des Sensorelements 131 des Nachlaufweg-Meßsystems 123, 131 einem - hohen oder niedrigen - Extremwert entspricht, so daß Änderungen des Ausgangssignalpegels des Sensorelements 131 jeweils in einem monotonen Zusammenhang mit dem Nachlaufweg ΔS in der einen oder der anderen Richtung stehen.

Eine diesbezüglich erforderliche Justierbarkeit des Nachlaufweg-Meßsystems 123, 131 ist beim dargestellten Ausführungsbeispiel dadurch realisiert, daß das Geberelement 131 auf einem Gewinde 134 des Hohlwellen-Endabschnitts 84" schraubbar und dadurch in axialer Richtung definiert verschiebbar angeordnet und mittels einer nicht dargestellten Sicherungsmutter fixierbar ist.

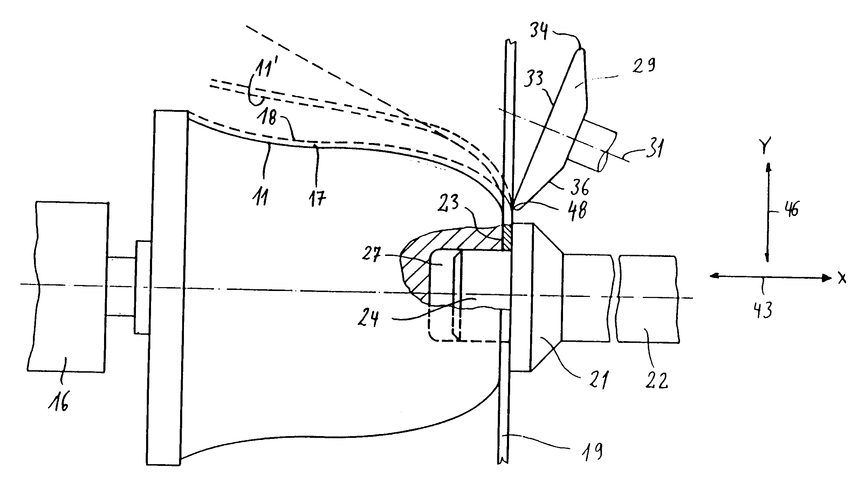

Anhand der Fig. 3, auf deren Einzelheiten nunmehr Bezug genommen sei, wird nachfolgend ein Steuerungsverfahren für die Bahnbewegungen der Drückrolle 29 der Drückmaschine 10 erläutert, das ebenfalls Gegenstand der Erfindung ist.

Zweck dieses Verfahrens ist es, bei einer Serienfertigung mehrerer, gleich geformter Gegenstände, z.B., wie dargestellt, glockenförmiger Lampenschirme, eine exakte Reproduzierbarkeit der Form dieser Lampenschirme sowie eine gleichmäßig gute Qualität der inneren und äußeren Oberflächen dieser Schirme zu erzielen, deren Verläufe durch die Außenkontur 11 des Drückfutters 12 und die Bewegungsbahn des Abwälzpunktes 48 der Drückrolle 29 an der Außenseite 18 des Drückteils 17 bestimmt sind, die im letzten Umlauf der Drückrolle 29 durchlaufen wird, in dem das Drückteil 17 seine endgültige Form erhält. Mit "Umlauf" wird dabei ein Bearbeitungszyklus verstanden, in dessen Verlauf die Drückrolle 29 einmal über den gesamten X-Koordinaten-Variationsbereich verfahren wird, innerhalb dessen eine Verformung des Drückteils 17 erforderlich ist, um dieses in gegebenenfalls mehreren vorläufigen Umläufen so weit vorzudrücken, daß schließlich in einem letzten Umlauf die endgültige Form mit der Außenkontur 18 erzielt wird. In praxi werden zahlreiche Umläufe durchgeführt, um das Drückteil mehr und mehr an seine endgültige Form anzunähern, bevor es sich schließlich mit seiner Innenfläche 11' an die Außenfläche 11 des Drückfutters 12 anschmiegt und danach in gegebenenfalls wiederum mehreren Umläufen unter Verringerung seiner Dicke soweit gestreckt wird, bis es schließlich seine endgültige Form erhalten hat.

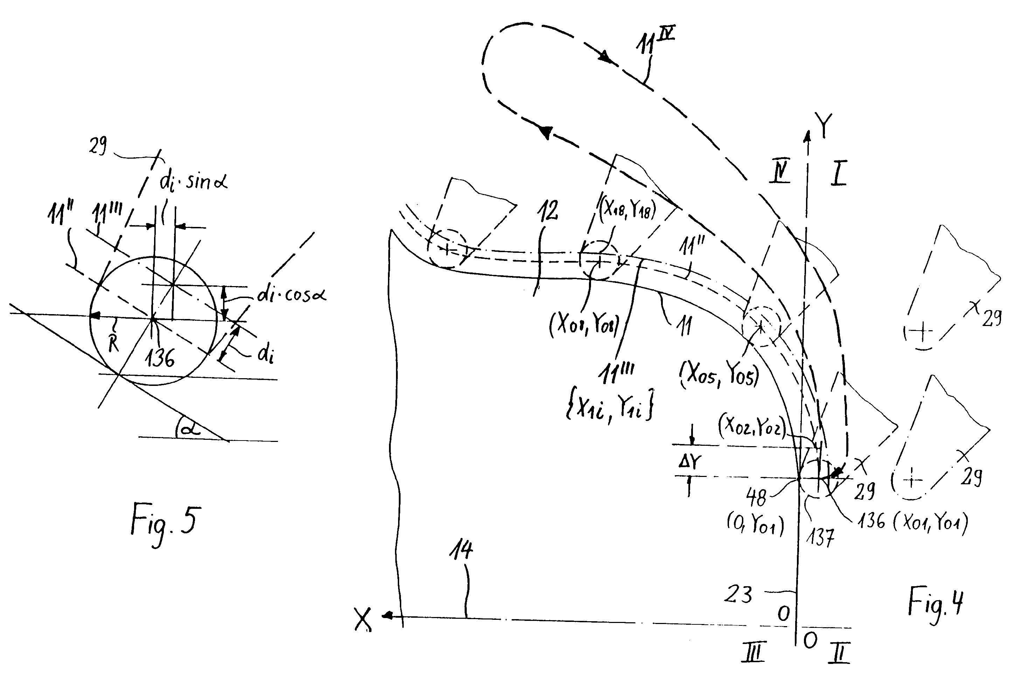

Zur Erläuterung eines einfachen Programmierverfahrens, nach welchem die für den Drückprozeß erforderlichen Bewegungsabläufe der Drückrolle 29 in die CNC-Steuereinheit 57 eingegeben werden können, wonach diese die an einer Vielzahl von Werkstücken zu wiederholenden Drückprozesse selbsttätig steuern kann, wird nunmehr auch auf die Einzelheiten der Fig. 4 Bezug genommen.

Vorab wird die Kontur 11 des Drückfutters 12 abgetastet und ein diese repräsentierender Satz von Positionskoordinaten $(X_{01}, Y_{01}; X_{02}, Y_{02}; ...; X_{0n} Y_{0n})$ als Stützstellen in die elektronische CNC-Steuereinheit 57 eingegeben und in dieser gespeichert.

Diese CNC-Steuereinheit 57 wird nachfolgend lediglich hinsichtlich ihrer Funktion erläutert, bei deren Kenntnis ein Fachmann der CNC-Steuerungstechnik diese Steuereinheit 57 mit gängigen Mitteln der Computer- und Datenverarbeitungstechnik realisieren kann, so daß eine Erläuterung baulicher und schaltungstechnischer Details der CNC-Steuereinheit 57 nicht erforderlich erscheint.

Bei der Abtastung der Kontur 11 des Drückfutters 12 wird die Drückrolle 29 einschließlich ihrer X- und Y-Koordinatenantriebe 52 und 53 selbst als Tastkopf ausgenutzt.

Um die Zahl der zu speichernden Koordinaten-Daten begrenzt zu halten, erfolgt die Abtastung in der zur Längsachse 14 - der Drehachse - des Drückfutters 12 parallelen X-Richtung in diskreten Schrittweiten $\Delta X$, die erforderlichenfalls variiert werden können.

In einem - willkürlich gewählten - Koordinatensystem, in welchem die X-Achse mit der zentralen Längsachse 14 - der Drehachse - des Drückfutters 12 zusammenfällt und die Y-Achse in der - ebenen -Stirnfläche 23 des Drücklfutters 12 radial, d.h. rechtwinklig zur X-Koordinatenachse 14 verläuft, wird mit der Abtastung an demjenigen Punkt der Außenkontur 11 des Drückfutters 12 begonnen, ab welchem eine Verformung der Ronde 19 erforderlich ist, um diese an den Verlauf der Außenfläche bzw. -kontur 11 des Drückfutters 12 anzuschmiegen.

Bei dieser Wahl des X-Y-Koordinatensystems liegt die abzutastende Kontur 11 in dessen IV-ten Quadranten. In der für die Abtastung vorgesehenen Ausgangsstellung der Drückrolle 29 befindet sich diese - "irgendwo" - im I-ten Quadranten dieses Koordinatensystems, z.B. in der gestrichelt eingezeichneten Position, wobei der lichte axiale Abstand der Drückrolle 29 von der Stirnfläche 23 des Drückfutters 12 deutlich größer ist als die maximalen Dicken der verarbeitbaren Werkstücke 19.

Der Anfangspunkt der Abtastung, der die Koordinaten $X_{01}$ und $Y_{01}$ hat, wird in der Weise angefahren, daß die Drückrolle 29 aus ihrer gestrichelt eingezeichneten Ausgangsstellung durch - z.B. "handgesteuerte" - Aktivierung der Y-Koordinaten-Antriebseinheit 53 in die strichpunktiert eingezeichnete Position gefahren wird, in welcher der Krümmungsmittelpunkt der als kreisbogenförmig gekrümmt vorausgesetzten Abwälzfläche 137 der Drückrolle 29 den Y-Koordinatenwert $Y_{01}$ hat. Während die Y-Koordinaten-Antriebseinheit 53 in dieser Position des Kolbens 64 ihres Linearzylinders 47 - durch hydraulische oder mechanische - "Verriegelung" gehalten wird, wird der Linearzylinder 42 der X-Koordinaten-Antriebseinheit 52 mit mäßigem, zwischen 1/20 und 1/8 seines maximalen Betriebsdruckes betragendem Druck beaufschlagt und dadurch die Drückrolle 29 im Punkt $(0, Y_{01})$ in Anlage mit der Stirnfläche 23 des Drückfutters 12 gedrängt. Die für diese Position der Drückrolle 29 charakteristischen Positions-Ausgangssignale des X-Positionsgebers 54 und des Y-Positionsgebers 56 werden als Koordinaten-Eingabe $(X_{01}, Y_{01})$ in der elektronischen CNC-Steuereinheit 57 gespeichert, wobei dieses Koordinatenpaar $(X_{01}, Y_{01})$ die Position des Krümmungsmittelpunktes 136 der Drückrolle 29 repräsentiert. Als nächstes wird, während die X-Koordinaten-Antriebseinheit 52 in der dem Koordinatenwert $X_{01}$ des Krümmungsmittelpunktes 136 der Drückrolle 29 entsprechenden Wert "verriegelt" wird, durch Aktivierung der Y-Koordinaten-Antriebseinheit 53 die Position $X_{01}, Y_{02}$ des Krümmungsmittelpunktes 136 der Drückrolle 29 angefahren, hierauf die Y-Koordinaten-Antriebseinheit 53 in ihrer dieser Position des Krümmungsmittelpunktes 136 der Drückrolle 29 entsprechenden Position ihres Kolbens 64 verriegelt und danach wieder die X-Koordinaten-Antriebseinheit 52 im Sinne eines Vorschubes in X-Richtung, d.h. auf das Drückfutter 12 zu druckbeaufschlagt, bis wieder Stillstand des Kolbens 64 des Linearzylinders 42 der X-Koordinaten-Antriebseinheit 52 erreicht ist. Die mit dieser Position des Drückwerkzeugs 29 verknüpften Ausgangssignale des X-Positionsgebers 54 und des Y-Positionsgebers 56 werden wiederum als Koordinaten-Eingabe $X_{02}, Y_{02}$ in der elektronischen Steuereinheit 57 gespeichert. Dabei wird der Änderungsschritt $\Delta Y$, um den die Koordinaten-Abtastung in Y-Richtung verändert wird, zunächst konstant gehalten.

Wird im Zuge der Abtastung der Außenkontur 11 ein Bereich derselben erreicht, in dem die Steigung der Außenkontur 11 in dem X-/Y-Koordinatensystem dem Betrage nach kleiner als 1 wird, was gemäß der schematischen stark vereinfachten Darstellung der Fig. 4 ab dem fünften Abtastschritt der Fall ist, so wird die Y-Schrittweite reduziert, z.B. auf den Wert $\Delta Y/2$ und danach die Abtastung analog weitergeführt, bis, beim Darstellungsbeispiel mit dem achten Abtastschritt ein Verlauf der Außenkontur erreicht ist, bei der deren Steigung den Wert 0 hat, d.h. die Außenkontur 11 parallel zur X-Achse 14 verläuft und demgemäß der Abwälzpunkt 48 der Drückrolle 29, gemäß der Darstellung der Fig. 4 genau "unterhalb" des Krümmungsmittelpunktes 136 der Abwälzfläche 137 angeordnet ist, während am Beginn der Abtastung der Abwälzpunkt 48 der Abwälzfläche 137 der Drückrolle 29 in seitlichem, dem Krümmungsradius R entsprechenden Abstand vom Krümmungsmittelpunkt 136 der Abwälzfläche 137 angeordnet war.

Sobald die Abtastung der Kontur 11 des Drückfutters 12 einen Bereich erreicht hat, in welchem deren Steigung dem Betrage nach 0 oder von 0 nur sehr wenig verschieden ist, wird das Abtastintervall ΔY in Y-Richtung weiter verringert, z.B. auf 1/10 des anfänglichen Wertes und danach die Abtastung wie vorstehend erläutert, fortgesetzt. Dadurch ist es möglich, relativ große Abschnitte in X-Richtung gleichsam zu "überspringen", ohne an Abtastgenauigkeit zu verlieren.

Je nach dem Betrag des Krümmungsradius R der Abwälzfläche 137 der Drückrolle 29 kann, nachdem ein Bereich der Abtastkontur 11 erreicht ist, in der diese "horizontal", d.h. parallel zur X-Achse verläuft, in Y-Richtung eine Schrittweite gewählt werden, die z.B. 1/100 derjenigen Schrittweite ΔY entspricht, die für die Abtastung gewählt wird, wenn die Außenkontur 11 sehr steil zur X-Achse verläuft, d.h. die Steigung der Außenkontur 11 größer als 1 ist.

Je nachdem, wie sich im weiteren Verlauf der Abtastung die Steigung der Außenkontur 11 des Drückfutters entwickelt, können - anhand der vorstehend erläuterten Kriterien - die Y-Schrittweiten der Abtastung sinngemäß gewählt werden.

Aus den solchermaßen sukzessive angefahrenen Positionen der Drückrolle 29 und den für diese Positionen gespeicherten Koordinaten-Daten ermittelt die CNC-Steuereinheit 57 durch Interpolation die komplette Bahnkurve 11" entlang derer sich der Krümmungsmittelpunkt 136 der Abwälzfläche 137 der Drückrolle 29 bewegt, wenn diese unmittelbar entlang der Außenkontur 11 des Drückfutters 12 geführt wird.

Bei der vorstehend erläuterten Abtastung ist das Drückfutter 12 nicht rotierend angetrieben ist.

Die in der Fig. 4 und in der Fig. 5, auf deren Einzelheiten ergänzend verwiesen sei, strichpunktiert eingezeichnete Bahn 11''', entlang welcher die Drückrolle 29 bzw. deren Abwälzflächen-Krümmungsmittelpunkt 136 im "letzten" Drück-Umlauf geführt werden muß, durch den der fertige Gegenstand seine endgültige Außenkontur 18 erhält, wird aus der - gestrichelt eingezeichneten - durch Abtastung der Außenkontur 11 des Drückfutters 12 gewonnenen Bahn 11'' dadurch gewonnen, daß zu jedem Punkt dieser "Abtast-Bewegungsbahn" 11'' die senkrecht zur Außenkontur 11 des Drückfutters 12 gemessene Soll-Dicke - senkrecht zu der Verlaufskurve 11" - addiert wird, so daß sich aus deren Punktkoordinaten $X_{0i}$, $Y_{0i}$; i = 1,2, ...n) für die einzelnen Punkte der Bahnkurve 11' deren Punktkoordinaten ($X_{1i}$, $Y_{1i}$) gemäß den folgenden Beziehungen ergeben:

$$X_{1i} \ = \ X_{0i} \ - \ d_i \cdot \sin\alpha_i \quad (1)$$

und

$$X_{1i} \ = \ Y_{0i} \ + \ d_i \cdot \sin\alpha_i \quad (2)$$

ergeben, wobei mit $d_i$ die Solldicken an den Stützstellen mit den Koordinaten $X_{1i}$, $Y_{1i}$ der im letzten Drück-Umlauf durchlaufenden Bahn und mit $\alpha_i$ die den entsprechend mit "i" indizierten Koordinatenwerten zugeordneten, von der X-Achse 14 aus gemessenen Steigungswinkel der Außenkontur 11 des Drückfutters 12 bezeichnet sind. Diese Winkel $\alpha_i$ werden von der Steuereinheit 57 aus den Koordinaten-Daten $X_{0i}$, $Y_{0i}$ der Bahnkurve 11'' des Krümmungsmittelpunktes der Drückrolle 29 rechnerisch ermittelt. Da die Bahnkurve 11' rechnerisch, z.B. als Interpolationspolynom vorgegebener Ordnung, z.B. 6. Ordnung, ermittelt wird, das mit glatt gekrümmtem Verlauf über die Abtast-Stützstellen gelegt ist, können die Steigungswinkel $\alpha_i$ auch für Bahnpunkte zwischen den Abtaststellen ermittelt werden. Voraussetzung dafür ist natürlich, daß die Schrittweiten der Abtastung in X- und Y-Richtung hinreichend klein sind. In praxi werden die diesbezüglichen Schrittweiten um 1 mm betragen, können aber auch kleiner gewählt werden oder in Bereichen, in denen die Bahn 11'' "parallel" zur X-Achse 14 verläuft, sehr viel größer sein.

Die für die Durchführung von Vordrück-Umläufen der Drückrolle 29 erforderlichen Bahnbewegungen derselben werden in der Weise in die elektronische Steuereinheit 57 eingegeben und von dieser gleichsam "erlernt", daß ein Drückfachmann in einem Muster-Drückvorgang den Drückvorgang, z.B. mittels einer von Hand betätigbaren hydraulischen Steuereinrichtung, die eine Rückmeldung über die auftretenden Gegenkräfte vermittelt oder allein "von Hand", d.h. auf konventionelle Weise, steuert, und daß hierbei in Abhängigkeit von gegebenen Schrittweiten X und/oder ΔY fortlaufend die im Zuge der Vordrückbewegungen (Index "v") erreichten Koordinatenpaare ($X_{iv}$, $Y_{iv}$), die als Ausgangssignale der X- und Y-Positionsgeber 54 und 56 erzeugt werden, in die CNC-Steuereinheit 57 eingelesen und in dieser in der Reihenfolge, in der sie durchlaufen worden sind, gespeichert und zum Wiederabruf abgelegt werden.

Um hierbei den günstigsten Bewegungsablauf im Hinblick auf die kurze Dauer des Drückvorganges und optimale Oberflächenqualität am fertigen Gegenstand 17 zu ermitteln, werden in aller Regel mehrere Muste-Drückprozesse durchgeführt.

Zur Veranschaulichung eines solchen Vordrück-Prozesses ist in der Fig. 4 eine dafür charakteristische Bewegungsbahn 11'''' schematisch angedeutet.

Die Wiederholung der Vordrück-Bewegungen der Drückrolle 29 erfolgt nach dem sogenannten Play-back"-Verfahren, wonach die im Hand-Drückverfahren ermittelten Koordinatendaten, die in der CNC-Steuereinheit 57 gespeichert worden sind, in zur Ansteuerung der Koordinaten-Antriebseinheiten 52 und 53 geeignete Positions-Sollwert-Vorgabesignale umgewandelt werden.

Spätestens in dem letzten Umlauf der Drückrolle 29, durch den das Drückteil 17 zwar seine endgültige Form erhält, zweckmäßigerweise auch schon in den vorausgehenden Umläufen, in denen das Drückteil 17 schon an der Außenkontur 11 des Drückfutters 12 anliegt, jedoch noch nicht seine endgültige äußere Kontur 18 hat, deren endgültige Form oftmals erst nach einer Vielzahl von weiteren Umläufen erzielt wird, werden im Verlauf solcher Umläufe auch der mittels des Geberelements 123 und des Sensorelements 131 des Meßsystems 63 erfaßte Nachlaufweg $\Delta S_x$ des Linearzylinders 42 der X-Koordinaten-Antriebseinheit 52 sowie der Nachlaufweg $\Delta S_y$ des Linearzylinders 47 der Y-Koordinaten-Antriebseinheit 53 überwacht und für deren Werte charakteristische Signale der CNC-Steuereinheit zugeleitet, die aus diesen Eingaben $\Delta S_x$ und $\Delta S_y$ eine mit diesen monoton anwachsende Vergleichsgröße $\Delta S$ bildet, diese mit einem Schwellenwert $\Delta S_{max}$ fortlaufend vergleicht und, wenn die Vergleichsgröße $\Delta S$ den Referenz-Schwellenwert $\Delta S_{max}$ übersteigt, Steuersignale für eine Änderung der Bahnbewegungen der Drückrolle dahingehend auslöst, daß die Vergleichsgröße $\Delta S$ den Schwellenwert $\Delta S_{max}$ wieder unterschreitet, wobei als diesbezüglich geeignete Maßnahmen die folgenden vorgesehen sind, die alternativ oder in Kombination ausgenutzt werden können:

1. Reduzierung der Bahngeschwindigkeit der Drückrolle 29 durch Verringerung der zeitlichen Rate, mit der die Positions-Sollwert-Vorgabe für die beiden Koordinaten-Antriebseinheiten 52 und 53 erfolgt und

2. Umschaltung der Bahnbewegung der Drückrolle 29 auf eine Bahn, die zwischen der im vorausgegangenen Umlauf durchlaufenen Bahn und derjenigen Bewegungsbahn liegt, bei deren Durchlaufen der Nachlaufweg-Schwellenwert $\Delta S_{max}$ überschritten worden ist, bis der Schwellenwert $\Delta S_{max}$ wieder um eine definierte Sicherheitsmarge $\Delta S'$ unterschritten wird.

Eine geeignete Kombination der vorstehend genannten Maßnahmen besteht darin, diese in der erwähnten Reihenfolge anzuwenden, d.h. zuerst die Bahnverfolgungsgeschwindigkeit zu reduzieren und dann erst die Bewegungsbahn radial zu erweitern. Wenn hierbei die auf die zentrale Achse 14 bezogenen Bahnradien jeweils gleich dem arithmetischen Mittel der auf die zentrale Achse 14 bezogenen Soll-Raten der als letzter begonnenen Bahn, derjenigen in deren Verlauf der Schwelllenwert $\Delta S_{max}$ überschritten worden ist, und der -davor - als letzter störungsfrei, d.h. ohne Überschreitung des Schwellenwertes $\Delta S_{max}$ durchlaufenen Bahn gewählt werden, so konvergieren die solchermaßen gewonnenen Bahnverläufe sehr schnell gegen eine Bahn, die ohne Überschreitung des Schwellenwertes $\Delta S_{max}$ durchlaufen werden kann.

Wann immer - selbsttätig gesteuert - eine oder beide der vorgenannten Maßnahmen - ein- oder mehrmals - zur Anwendung gebracht werden, um die Drückrolle 29 in einem von einer vorprogrammierten, erlernten Bahn abweichenden Bahnverlauf über den gesamten Koordinaten-Variationsbereich eines Umlaufs zu führen, wird anschließend der vorprogrammierte Umlauf, der "auf Anhieb" nicht möglich gewesen ist, wieder eingesteuert, wonach dann, wenn dieser Umlauf durchgeführt werden konnte, die Steuerung der Bewegungsbahn gemäß dem nächsten vorprogrammierten Bahnverlauf wieder arbeitet, andernfalls die vorstehend erläuterte Prozedur noch einmal selbsttätig gesteuert wiederholt wird, bis wieder Verhältnisse erreicht sind, die eine Fortsetzung des Drückprozesses nach dem "erlernten" Verfahren ermöglichen.

Diese "Rückkehr" zu den durch den Muster-Drückprozeß erlernten Bahnverläufen ist zweckmäßig, da Änderungen solcher Bahnverläufe im allgemeinen die Ausnahme bleiben werden. Gleichwohl ist es ebenfalls zweckmäßig, einmal vorgenommene Änderungen auch für weitere Drückprozesse zu berücksichtigen und diese Änderungen in das im Muster-Drückprozeß erlernte Programm einzufügen und beizubehalten.

Um mit einem einzigen Schwellenwert $\Delta S_{max}$ auskommen zu können, ist es zweckmäßig, wenn die CNC-Steuereinheit 57 die Nachlaufweg-Eingaben $\Delta S_x$, und $\Delta S_y$ gemäß der Beziehung

$$\Delta S = \sqrt{\Delta S_x{}^2 + \Delta S_y{}^2} \quad (3)$$

verarbeitet.

Des weiteren ist es zum vorgenannten Zweck günstig, wenn die Bahnbewegungen für die aufeinanderfolgenden Umläufe dahingehend programmiert bzw. im Muster-Drückprozeß so "erlernt" werden, daß, eine exakte Reproduzierbarkeit des erlernten Drückprozesses unterstellt und gleiche Beschaffenheit der der Bearbeitung zu unterwerfenden Ronde vorausgesetzt, die gemäß der Beziehung (3) gebildete Größe $\Delta S$ nur noch innerhalb enger Grenzen von z.B. ± 20 % variiert.

Eine derartige Programmierung aufeinanderfolgender Drück-Umläufe auf gleichsam "konstanten" Gesamt-Nachlaufweg beider Koordinaten-Antriebseinheiten 52 und 53 kann - dem Grundgedanken nach - wie folgt durchgeführt werden:

Nachdem durch einen Muster-Drückprozeß eine optimale Bahnführung der Drückrolle 29 sowohl für die Vordrück-Umläufe als auch für den letzten Umlauf ermittelt worden ist, oder diese optimale Bahnführung durch Mittelung über mehrere solcher Muster-Drückprozesse erzielt worden ist, wird die Drückrolle 29, ohne daß in die Drückmaschine 10 ein zu bearbeitendes Werkstück 19 eingespannt ist, gesteuert durch die CNC-Steuereinheit 57 mit konstanter Bahn-Verfolgungsgeschwindigkeit $v_B$ entlang der optimalen Bahn-Führungsdaten geführt, wobei beide Nachlauf-Regelkreise der Koordinaten-Antriebseinheiten 52 und 53 mit sehr geringer Kreisverstärkung betrieben werden und fortlaufend die Nachlauf-Wegkomponenten $\Delta S_x$ und $\Delta S_y$ sowie die Vergleichsgröße $\Delta S$ ermittelt und/oder aufgezeichnet werden.

Hierdurch wird - wegen der Konstanthaltung der Bahngeschwindigkeit - im Ergebnis ein wegabhängiges Profil des Nachlauf-Weges im Bearbeitungsbereich gewonnen.

Aus diesem weg- bzw. ortsabhängigen Profil des Nachlaufweges $\Delta S$ kann, da dieser der Bahngeschwindigkeit proportional ist, ein ortsabhängiges Profil der Bahn-Verfolgungsgeschwindigkeit errechnet werden, das im Ergebnis einen konstanten oder nahezu konstanten Nachlaufweg $\Delta S$ ergibt, wenn die Geschwindigkeit entsprechend dem Geschwindigkeitsprofil gesteuert wird, was durch Reduktion oder Anhebung der zeitlichen Rate, mit der die Positions-Sollwert-Vorgabedaten aus der elektronischen CNC-Steuereinheit 57 ausgegeben werden, auf einfache Weise möglich ist.

Die hierzu erforderliche Gestaltung und Auslegung der CNC-Steuereinheit 57 ist dem einschlägigen Fachmann bei Kenntnis der Problemstellung ohne weiteres möglich, so daß die Erläuterung diesbezüglicher schaltungstechnischer Einzelheiten nicht erforderlich ist.

Nach einer solchen Programmierung erfolgt somit die Bahnbewegung der Drückrolle 29 entlang der programmierten Sollkonturen mit variabler Geschwindigkeit, dafür aber mit kontantem oder nahezu konstantem Gesamt-Nachlaufweg, so daß ein Überschreiten eines Schwellenwertes $\Delta S_{max}$ desselben auch ein hinreichend zuverlässiges Indiz dafür ist, daß der Drückprozeß nicht optimal abläuft, was jedoch - im Hinblick auf das Arbeitsergebnis - durch die unter 1. und 2. genannten Maßnahmen auf einfache Weise korrigierbar bzw. vermeidbar ist.

Die Programmierung der Bahnbewegungen der Drückrolle 29 kann, im Prinzip dadurch fortlaufend verbessert werden, daß in einem Drückprozeß erfolgte Änderungen der Bahnbewegungen, die mittels der Positionsgeber 54 und 56 auch während eines im Zuge serieller Fertigung von Drückteilen erfaßt und in die CNC-Steuereinheit 57 eingegeben werden können, beim Drücken des nächsten Teils und der weiteren als Basis für die Steuerung der Bahnbewegungen ausgenutzt werden. Bei einer Gestaltung der Drückmaschine 10 mit dieser Fähigkeit zur "Erinnerung" an die Bahnbewegungen der Drückrolle in der jeweils vorausgegangenen Phase eines Drückprozesses ist, nachdem in einem relativ wenig aufwendigen Muster-Drückprozeß ein leidlich günstiger Bewegungsablauf, gleichsam im Sinne einer ersten Näherung, ermittelt worden ist, eine "Selbstprogrammierung" der Drückmaschine auf den optimalen Bewegungsablauf möglich.

Es ist daher nicht erforderlich, schon den Muster-Drückprozeß zu optimieren, was sehr zeitaufwendig wäre, sondern es ist gleichsam ausreichend, einen leidlich günstigen Verlauf der Bahnbewegungen der Drückrolle 29 vorzugeben und der Drückmaschine 10 selbst die Programmierung auf optimale Bahnverläufe der Drückrolle 29 zu überlassen.

In spezieller Gestaltung der Drückmaschine 10 und Verfahrensweise zu ihrer Betriebssteuerung ist vorgesehen, daß aus dem durch Abtastung der Außenkontur 11 des Druckfutters 12 gewonnenen Satz von Koordinaten-Daten durch Hinzufügung von axialen Koordinaten-Inkrementen und radialen Koordinaten-Inkrementen $\delta X$ bzw. $\delta Y$ ein Satz von Koordinaten-Daten erzeugt wird, der einer in einem Mindest-Abstand von der Außenkontur 11 des Drückfutters 12 und innerhalb der Soll-Kontur des herzustellenden Drückteils 17 verlaufenden Sicherheitskontur entspricht, bei deren Überquerung durch den Abwälzpunkt 48 der Druckrolle 29 ein Steuersignal ausgelöst wird, das mindestens eine der folgenden Sicherheitsmaßnahmen auslöst:

1. Abschaltung der Koordinaten-Antriebseinheiten 52 und 53

2. Erniedrigung der Kreisverstärkung $K_v$ der Nachlauf-Regelkreise der Koordinaten-Antriebseinheiten 52 und 53, die durch die Beziehung

$$K_v = v/\Delta S$$

gegeben ist und/oder

3. Auslösung eines akustischen und/oder optischen Warnsignals.

In weiterer spezieller Betriebsart der Drückmaschine 10 kann die Abtastung der Außenkontur 11 des Drückfutters 12 in der Weise durchgeführt werden, daß während eines ersten über den Koordinaten-Variationsbereich führenden Umlaufs der Drückrolle 29 die eine deer beiden Koordinaten-Antriebseinheiten 52 oder 53 mit konstantem, niedrigem Antriebsdruck beaufschlagt ist, während die andere Koordinaten-Antriebseinheit 53 bzw. 52 mit einer definierten, vorzugsweise zeitlich konstanten Ausgaberate der Koordinaten-Sollwert-Daten angesteuert wird, die in einem Umlauf der Drückrolle erreicht werden sollen. Danach wird im Verlauf eines zweiten über den Koordinaten-Variationsbereich führenden Umlaufs der Drückrolle die andere der beiden Koordinaten-Antriebseinheiten 53 bzw. 52 mit konstantem, niedrigem Antriebsdruck beaufschlagt, während die eine Koordinaten-Antriebseinheit 52 bzw. 53 mit der relativ höheren Kreisverstärkung betrieben und mit einer definierten, z.B. zeitlich konstanten Ausgabe-Rate der Koordinaten-Sollwert-Daten angesteuert wird, die in einem Umlauf der Druckrolle 29 erreicht werden sollen. Hierbei werden permanent die in dem mit der höheren Kreisverstärkung betriebenen Regelkreis 52 bzw. 53 auftretenden Nachlaufwege $\Delta S(x)$ bzw. $\Delta S(y)$ erfaßt und gespeichert. Aus den solchermaßen ermittelten Koordinatenabhängigen Nachlaufwegen $\Delta S(x)$ und $\Delta S(y)$ wird ein ortsabhängiges Profil der Bahnverfolgungsgeschwindigkelt $V_B(xy)$ der Drückrolle 29 ermittelt, das, über die Bahnbewegung hinweg gesehen, einem mindestens annähernd konstanten Wert des Nachlaufweges

$$\Delta S(x,y) = \sqrt{\Delta S(y)^2 + \Delta S(x)^2}$$ entspricht.

Wenn, wie anhand der Figur 2 erläutert, das in Kombination mit dem Winkelstellungs-Meßsystem 121, 126 und dem Referenz-Meßsystem 122, 129 vorgesehene Nachlaufweg-Meßsystem 123, 131, die Fähigkeit hat, ein dem Nachlaufweg direkt proportionales Ausgangssignal zu erzeugen, das somit in Einheiten des Koordinatensystems geeicht werden kann, so ist das diese drei Meßsysteme insgesamt umfassende Meßsystem 63 auch für die Erfassung des Positions-Ist-Wertes der Drückrolle 29 geeignet, der dann aus einer Subtraktion der Nachlaufweg-Ausgabe des Nachlaufweg-Meßsystems 123, 131 von der Positions-Sollwert-Ausgabe des kombinierten Winkelstellungs- und Referenz-Meßsystems 121, 126, 127 bzw. 122, 129 gewinnbar ist.

Die Positionsgeber 54 und 56 werden dann nicht mehr benötigt, und es kann in einem nachlaufgeregelten Abtast-Vorgang die Kontur 11 des Drückfutters 12 dadurch ermittelt werden, daß die zur Abtastung vorgesehenen Stützstellen angefahren werden, indem, ausgehend von einer Position der Drückrolle 29, in der diese in einem radialen und axialen lichten Mindest-Abstand von der als erster zu erfassenden Stützstelle des Drückfutters 12 angeordnet ist, zunächst eine der beiden Koordinaten-Antriebseinheiten, z.B. die X-Antriebseinheit 52, während die Y-Antriebseinheit 53 festgehalten wird, zur Ausführung eines inkrementalen Tasthubes $\Delta X$ angesteuert wird, sodann ihrerseits stillgesetzt wird und darauf die Y-Antriebseinheit 53 mit vorgegebener Geschwindigkeit, die durch die Ausgaberate inkremental gestufter Positions-Sollwert-Daten durch die CNC-Steuereinheit 57 bestimmt ist, radial bis in Anlage der Drückrolle 29 mit dem Drückfutter 12 gefahren wird, und, sobald der mit dem Auftreffen der Drückrolle 29 auf das Drückfutter 12 ansteigenden Nachlaufweg $\Delta S_y$, einen vorgegebenenWert $\Delta S_{ym}$ erreicht, die Sollwert-Datenausgabe beendet, die Y-Antriebseinheit 53 stillgesetzt und als Y-Koordinatenwert für die Konturen-Stützstelle der um den Nachlaufweg $\Delta S_{ym}$ verminderte, dem Anfahren dieser Position zugrunde gelegte Sollwert gespeichert wird, wonach sodann die Y-Koordinaten-Antriebseinheit 53 mit dem der Stützstelle zugeordneten Y-Positions-Sollwert angesteuert und in dieser Position stillgesetzt wird und die Drückrolle 29 durch Ansteuerung der X-Antriebseinheit 52 aus dieser Position ausgedrückt und sodann ihrerseits mit konstanter Geschwindigkeit $v_x$ auf die Stützstelle mit der zu bestimmenden X-Koordinate hinzubewegt wird, und, nachdem der Nachlaufweg $\Delta S_x$ in der X-Richtung den betragsmäßig im Wert $\Delta S_y$ entsprechenden Wert erreicht hat, als X-Koordinaten-Wert der Stützstelle wiedeer der um den in Richtung gemessenen Nachlaufweg $\Delta S_{xm}$ verminderte Sollwert der Ansteuerung gespeichert wird.

## Patentansprüche

1. Verfahren zur Steuerung der Umlauf-Bahnbewegungen der Drückrolle (29) einer Drückmaschine (10), mit der ein rondenförmiges Blech-Werkstück (19) durch Andrücken an ein rotierend antreibbares Drückfutter (12) zu einem sich an eine Formgebungsfläche des Drückfutters einseitig anschmiegenden Drückteil (17) verformbar ist, wobei die Drückrolle an einem mittels je einer Koordinaten-Antriebseinheit (52,53) in zwei zueinander orthogonalen (X- und Y-)Richtungen verschiebbar antreibbaren Lagerblock (32) um eine blockfeste Achse (31) frei drehbar gelagert ist und die Ansteuerung der als ventilgesteuerte Hydrozylinder ausgebildeten Koordinaten-Antriebseinheiten (52,53) nach einem Bahn-Wiederholungs(Play-back)-Verfahren erfolgt, wonach in mindestens einem von einem Drückfachmann ausgeführten Muster-Drückprozeß für die hierbei durchlaufenen Positionen der Drückrolle (29) charakteristische mit Hilfe von Positionsgebern ermittelte Koordinaten-Daten in einer elektronischen NC-bzw. CNC-Steuereinheit (57) gespeichert und von dieser zu Ausgabedaten verarbeitet werden, durch deren seriellen Abruf die X- und Y-Koordinaten-Antriebseinheiten im Sinne einer Verfolgung des im Muster-Drückprozesses ermittelten Bahnverlaufes der Drückrolle (29) ansteuerbar sind, und wobei vorab die Kontur des Drückfutters (12) 812) abgetastet und ein für deren Verlauf charakteristischer Satz von Koordinaten-Daten in die NC- bzw. CNC-Steuereinheit (57) eingegeben wird, aus denen eine Sicherheitskurve ermittelt wird, die die Grenze der engstmöglichen Annäherung der Drückrolle (29) an das Drückfutter (12) markiert,
**dadurch gekennzeichnet,** daß
a) die Koordinaten-Antriebseinheiten (52 und 53) nach einem mit elektrisch gesteuerter Positions-Sollwertvorgabe und mechanischer Istwert-Rückmeldung arbeitenden Nachlauf-Regelverfahren betrieben werden,
b) zur Abtastung der Außenkontur (11) des Drückfutters (12) die Drückrolle (29) und die für deren Bewegungssteuerung vorgesehenen Antriebseinheiten (52 und 53) ausgenutzt werden, wobei diese nur mit einem kleinen Bruchteil der maximal ausnutzbaren Regelkreis-Verstärkung betrieben werden und c) mindestens während des letzten Umlaufs der Drückrolle (29) durch den das Drückteil (17) seine endgültige Form erhält, fortlaufend der dem Unterschied zwischen dem eingesteuerten Positions-Sollwert und dem Positions-Istwert der Drückrolle (29) entsprechende Nachlaufweg $\Delta S$ (Schleppfehler) gemessen wird, wobei, wenn dieser Nachlaufweg $\Delta S$ einen Schwellenwert $\Delta S_{max}$ überschreitet, mindestens eine der folgenden Maßnahmen getroffen wird:

1. Erniedrigung der Bahn-Verfolgungsgeschwindigkeit $V_B$ der Drückrolle (29) durch Verminderung der Steuerdaten-Ausgaberate und

2. Übergang zu einer Bahnverlaufskurve der Drückrolle (29) und damit ihres Abwälzpunktes (48), die einer Vergrößerung des normal zur Außenkontur (11) des Drückfutters (12) gemessenen Abstandes des Drückrollen-Abwälrpunktes (48) gegenüber dessen zuvor maßgeblichem Sollwert-Verlauf entspricht,

bis der schwellenwert $\Delta S_{max}$ um einen definierten Betrag $\delta S$ unterschritten ist.

2. Verfahren nach Anspruch 1,
dadurch gekennzeichnet, daß die zu Abtastung der Kontur (11) des Drückfutters (12) vorgesehenen Stützstellen angefahren werden, in dem, ausgehend von einer Position der Drückrolle (29), in der diese in einem radialen und einem axialen lichten Mindestabstand von der zu erfassenden Stützstelle des Drückfutters (12) angeordnet ist, zunächst einer der beiden Koordinaten-Antriebseinheiten, z.B. die X-Antriebseinheit (52), während die Y-Antriebeinheit (53) festgehalten bleibt, zur Ausführungs eines inkrementalen Tasthubes $\Delta X$ angesteuert wird, sodann ihrerseits stillgesetzt wird und darauf die andere Koordinaten-Antriebseinheit, die Y-Antriebseinheit (53) mit vorgegebener Geschwindigkeit vy - radial - bis in Anlage der Drückrolle (29) mit dem Drückfutter (12) gefahren wird, und, sobald der mit dem Auftreffen der Drückrolle (29) auf das Drückfutter (12) ansteigende Nachlaufweg $\Delta S_y$ einen vorgegebenen Wert $\Delta S_{ym}$ erreicht, die Sollwert-Datenausgabe beendet, die Y-Antriebeinheit (53) stillgesetzt und als Y-Koordinatenwert für die Kontur-Stützstelle der um den Nachlaufweg $\Delta S_{ym}$ verminderte, dem Anfahren dieser Position zugrundegelegte Sollwert gespeichert wird, wonach sodann die Y-Antriebseinheit (53) mit dem der Stützstelle zugeordneten Y-Positions-Sollwert angesteuert und in dieser Position stillgesetzt wird und die Drückrolle (29) durch Ansteuerung der X-Antriebeinheit (52) aus dieser Position ausgerückt und sodann ihrerseits mit konstanter Geschwindigkeit $v_x$ auf die Stützstelle mit der nun bestimmten Y-Koordinate hinzu bewegt wird, und, nachdem der Nachlaufweg $\Delta S_x$ in der X-Richtung einen betragsmäßig dem Wert $\Delta S_{ym}$ entsprechenden Wert erreicht hat, als X-Koordinatenwert der Stützstelle wieder der um den in X-Richtung gemessenen Nachlaufweg $\Delta S_{xm}$ verminderte Sollwert $X_s$ der Ansteuerung gespeichert wird.

3. Verfahren nach Anspruch 1 oder Anspruch 2,
dadurch gekennzeichnet, daß die Bahn-Verlaufskoordinaten eines Umlaufs der Drückrolle (29), in dessen Bahnverfolgung von einem vorprogrammierten Bahnverlauf auf einen radial erweiterten Bahnverlauf des Drückrollen-Abwälzpunktes (48) übergegangen worden ist, für einen nachfolgenden Drückprozeß als Bahn-Sollkoordinaten benutzt werden.

4. Verfahren nach Anspruch 1 oder Anspruch 2,
dadurch gekennzeichnet, daß an dem durch Abtastung der Außenkontur (11) des Drückfutters (12) gewonnenen und in die NC- bzw. CNC-Steuereinheit (57) eingegebenen Satz von Koordinaten-Daten durch Hinzufügen von axialen (± X)- und radialen (± Y)-Komponentendaten ein Satz von Koordinaten-Daten erzeugt wird, der dem Verlauf einer Soll-Kontur (18) entspricht, die mit einer vorgegebenen, gegebenenfalls variierenden Ausgaberate der sie repräsentierenden Positions-Sollwertdaten angesteuert werden muß, damit das fertige Drückteil (17) die vorgegebene Außenkontur erhält.

5. Verfahren nach einem der Ansprüche 1 bis 4,
dadurch gekennzeichnet, daß aus dem durch Abtastung der Außenkontur (11) des Drückfutters (12) gewonnenen Satz von Koordinaten-Daten durch Hinzufügung von axialen Koordinaten-Inkrementen (± $\delta X$) und radialen Koordinaten-Inkrementen (±$\delta Y$) ein Satz von Koordinaten-Daten erzeugt wird, der einer in einem Mindest-Abstand von der Außenkontur (11) des Drückfutters (12) und innerhalb der Soll-Kontur des herzustellenden Drückteils (17) verlaufenden Sicherheitskontur entspricht, bei deren Überquerung durch den Abwälzpunkt (48) der Drückrolle (29) ein Steuersignal ausgelöst wird, das mindestens eine der folgenden Sicherheitsmaßnahmen auslöst:

1. Abschaltung der Koordinaten-Antriebseinheiten (52 und 53)

2. Erniedrigung der Kreisverstärkung der Nachlauf-Regel-Kreise der Koordinaten-Antriebseinheiten (52 und 53)

3. Auslösung eines akustischen und/oder optischen Warnsignals.

6. Verfahren nach Anspruch 5,
dadurch gekennzeichnet, daß bei der Abtastung der Außenkontur (11) des Drückfutters (12) während eines ersten über den Koordinaten-Variationsbereich führenden Umlaufes der Drückrolle (29) die eine der beiden Koordinaten-Antriebseinheiten (52 oder 53) mit konstantem, niedrigem Antriebsdruck beaufschlagt ist, während die andere Koordinaten-Antriebseinheit (53 bzw. 52) mit einer relativ höheren Kreisverstärkung betrieben wird und mit einer definierten, vorzugsweise zeitlich konstanten Ausgabe-Rate der Koordinaten-Sollwertdaten angesteuert wird, die in einem Umlauf der Drückrolle (29) erreicht werden sollen, und danach im Verlauf eines zweiten über den Koordinaten-Variationsbereich führenden Umlaufes der Drückrolle (29) die andere beiden Koordinaten-Antriebseinheiten (53 oder 52) mit konstantem, niedrigem Antriebsdruck beaufschlagt ist, während die eine Koordinaten-Antriebseinheit (53 bzw. 52) mit der relativ höheren Kreisverstärkung betrieben wird und mit einer definierten, vorzugsweise zeitlich konstanten Ausgabe-Rate der Koordinaten-Sollwertdaten angesteuert wird, die in einem Umlauf der Drückrolle (29) erreicht werden sollen, und dabei permanent die in dem mit der höheren Kreisverstärkung betriebenen Regelkreis (52 bzw. 53) auftretenden Nachlaufwege $\Delta S(x)$ bzw. $\Delta S(y)$ erfaßt und gespeichert werden, und daß aus den solchermaßen ermittelten Koordinaten-abhängigen Nachlaufwegen $\Delta S(y)$ und $\Delta S(x)$ ein ortsabhängiges Profil der Bahnverfolgungsgeschwindigkeit $v_B(x, y)$ der Druckrolle (29) ermittelt wird, das, über die Bahnbewegung hinweg gesehen, einem mindestens annähernd konstanten Wert des Nachlaufweges

$$\Delta S(x,y) \;=\; \sqrt{\Delta S(y)^2 + \Delta S(x)^2}$$

entspricht.

7. Verfahren nach einem der Ansprüche 1 bis 5,
dadurch gekennzeichnet, daß in mindestens einem ohne Werkstück (19) und mit niedriger Kreisverstärkung der Nachlauf-Regelkreise der Koordinaten-Antriebseinheiten (52 und 53) durchgeführten Umlauf, bei dem die Bahn des Abwälzpunktes (48) der Drückrolle (29) dem Soll-Konturenverlauf (18) der dem Drückfutter (12) abgewandten Fläche des Drückteils (17) entspricht, bei kontant gehaltener Bahngeschwindigkeit $v_B$ die Ortsabhängigkeit des Nachlaufweges $\Delta S(x\,y,)$ um den die Ist-Positionen der Kolben (64) der Linearzylinder (42 und 47) der Koordinaten-Antriebseinheiten (52 und 53) den Soll-Positionen nacheilen, gemessen wird, daß aus dem sich hieraus ergebenden ortsabhängigen Profil $\Delta S(x, y)$ des Nachlaufweges $\Delta S$ das ortsabhängige Profil $v_B(x, y)$ der Bahngeschwindigkeit $v_B$ ermittelt wird, das über den Bahnverlauf hinweg konstantem Nachlaufweg $\Delta S$ entspricht, und daß nach diesem Geschwindigkeitsprofil $v(x, y)$ mindestens im letzten Umlauf der Drückrolle (29) die Bahnverfolgungsgeschwindigkelt der Drückrolle (29) gesteuert wird.

8. Drückmaschine (10), mit der ein rondenförmiges Blech-Werkstück (19) durch Andrücken an ein rotierend antreibbares Drückfutter (12) zu einem sich an eine Formgebungsfläche des Drückfutters (12) ein seitig anschmiegenden Drückteil (17) verformbar ist, mit einer Drückrolle (29), die an einem mittels je einer Koordinatenantriebseinheit (52,53), welche als ventilgesteuerte Hydrozylinder ausgebildet sind, in zwei zueinander orthogonalen (X und Y) Richtungen verschiebbar antreibbaren Lagerblock (32) um eine blockfeste Achse (31) frei drehbar gelagert ist, mit Positionsgebern (54,56), welche für die von der Drückrolle (29) durchlaufenen Positionen charakteristische Ausgangssignale erzeugen, die als Koordinaten-Daten mittels einer NC- bzw. CNC-Steuereinheit (57) speicherbar und durch seriellen Abruf zur Steuerung von Umlauf-Bahnbewegungen der Drückrolle (29) im Sinne einer Verfolgung eines in einem Muster-Drückprozeß ermittelten Bahnverlaufs der Drückrolle (29) ausnutzbar sind, dadurch gekennzeichnet, daß die Koordinaten-Antriebseinheiten (52,53) mit elektrisch gesteuerter Positions-Sollwert-Vorgabe und mechanischer Positions-Istwert-Rückmeldung arbeitende Nachlauf-Regelventile (49,51) umfassen, mit einem Meßsystem (63), das fortlaufend den Nachlaufweg ($\Delta S$) mißt, um den sich der Positions-Istwert der Drückrolle (29) von deren eingesteuertem Positions-Sollwert unterscheidet, wobei die elektronische Steuereinheit (57) einen Vergleich des gemessenen Nachlaufweges ($\Delta S$) mit einem vorgegebenen Schwellenwert ($\Delta S_{max}$) vermittelt und, falls der gemessene Nachlaufweg ($\Delta S$) den Schwellenwert ($\Delta S_{max}$) überschreitet, selbsttätig mindestens eine der folgenden Maßnahmen einleitet:

1. Erniedrigung der Bahn-Verfolgungsgeschwindigkeit $v_B$ der Drückrolle (29) durch Verminderung der Steuerdaten-Ausgaberate und

2. Übergang zu einer Bahnverlaufskurve der Drückrolle (29) und damit ihres Abwälzpunktes (48), die einer Vergrößerung des normal zur Außenkontur (11) des Drückfutters (12) gemessenen Abstandes des Drückrollen-Abwälzpunktes (48) gegenüber dessen zuvor maßgeblichem Sollwert-Verlauf entspricht,

bis der Schwellenwert ($\Delta S_{max}$) um einen definierten Betrag ($\delta S$) unterschritten ist, wobei die zur Steuerung der Bahnbewegungskomponenten vorgesehenen Nachlauf-Regelventile (49, 51) der Koordinaten-Antriebseinheiten (52,53) als Proportionalventile ausgebildet sind, bei denen die Auslenkungen ihrer Ventilkörper (72) aus einer neutralen Grundstellung (0) ein Maß für den Nachlaufweg ($\Delta S$) des jeweiligen Koordinaten-Antriebs-Regelkreises sind, und daß das Nachlaufweg-Meßsystem (63) Sensorelemente umfaßt, die für die Auslenkungen der Ventilkörper (72) und/oder der Ventilbetätigungsglieder (99) der Nachlauf-Regelventile (49, 51) aus deren Grundstellung (0) charakteristische elektrische Ausgangssignale erzeugen.

## Claims

1. Process for controlling the revolving path motions of the spinning roller (29) of a spinning lathe (10) by means of which a round-blank sheet-metal workpiece (19) is formable, by being pressed against a rotationally drivable spinning chuck (12), into a spun part (17) unilaterally hugging a shaping surface of the spinning chuck, wherein the spinning roller is supported to be freely rotatable, on a bearing block (32) shiftable by means of respectively one coordinate drive unit (52, 53) into two mutually orthogonal (X- and Y-) directions, about an axis (31) fixed at the block, and wherein the activation of the coordinate drive units (52, 53), fashioned as valve-controlled hydraulic cylinders, takes place according to a track repetition (play-back) process, in accordance with which, in at least one master spinning process conducted by an expert in the spinning lathe art, coordinate data characteristic for the thus- traversed positions of the spinning roller (29) and determined with the aid of position pickups are stored in an electronic NC or CNC control unit (57) and are processed by the latter to produce output data, the X-and Y-coordinate drive units being actuatable by the serial call-up of these output data along the lines of tracking the course of travel of the spinning roller (29) determined during the master spinning process, and wherein initially the contour of the spinning chuck (12) is scanned, and a set of coordinate data characteristic for the configuration of such contour is introduced into the NC or CNC control unit (57), a safety curve being determined from these data which marks the limit of a closest possible approach of the spinning roller (20) toward the spinning chuck (12),
characterised in that
   (a) the coordinate drive units (52 and 53) are operated according to a follow-up control process working with electrically controlled reference position value presetting and mechanical actual value acknowledgement,
   (b) the spinning roller (29) and the drive units (52 and 53) provided for the motion control thereof are utilized for scanning the outer contour (11) of the spinning chuck (12), wherein these drive units are operated only with a small fraction of the maximally usable control circuit amplification, and
   (c) the follow-up path $\Delta S$ (lag error) corresponding to the difference between the set reference position value and the actual position value of the spinning roller (29) is measured continuously at least during the last revolution of the spinning roller (29) through which the spun part (17) receives its final shape, wherein, when this follow-up path $\Delta S$ exceeds a threshold value $\Delta S_{max}$, at least one of the following measures is taken:
      1. reduction of the path tracking velocity $v_B$ of the spinning roller (29) by decreasing the control data output rate, and
      2. transition to a path routing curve of the spinning roller (29) and thus of its rolling-off point (48) corresponding to an increase of the distance of the spinning roller rolling-off point (48), measured normally to the outer contour (11) of the spinning chuck (12), with respect to its previously governing reference value curve,
   until the threshold value $\Delta S_{max}$ has been exceeded in the downward direction by a defined amount $\delta S$.

2. Process according to claim 1, characterised in that the nodes provided for scanning the contour (11) of the spinning chuck (12) are covered by first activating, starting with a position of the spinning roller (29) wherein the latter is located at a radial and an axial inside minimum distance from the node of the spinning chuck (12) to be covered, one of the two coordinate drive units, e.g. the X-drive unit (52) while the Y-drive unit (53) remains retained, for performing an incremental scanning stroke $\Delta X$, then is itself arrested and thereupon the other coordinate drive unit, the Y-drive unit (53), is moved with a predetermined velocity

$v_y$ - radially - up into engagement of the spinning roller (29) with the spinning chuck (12) and, as soon as the follow-up path $\Delta S_y$, increasing with the impingement of the spinning roller (29) onto the spinning chuck (12), has reached a predetermined value $\Delta S_{ym}$, the reference value data output is terminated, the Y-drive unit (53) is arrested, and, as the Y-coordinate value for the contour node, the reference value is stored which is reduced by the follow-up path $\Delta S_{ym}$ and forms the basis for covering this position, whereupon the Y-drive unit (53) is then activated with the Y-position reference value associated with the node, and is arrested in this position, and the spinning roller (29), by activation of the X-drive unit (52), is displaced from this position and then, in turn, is moved at constant velocity $v_x$ toward the node with the presently determined Y-coordinate, and, after the follow-up path $\Delta S_x$, in the X-direction, has reached a value corresponding in its amount to the value $\Delta S_{ym}$, the reference value $X_s$ of the activation, reduced by the follow-up path $\Delta S_{xm}$ measured in the X-direction, is stored again as the X-coordinate value of the node.

3. Process according to claim 1 or claim 2, characterised in that the path routing coordinates of one revolution of the spinning roller (29), where a transition has been made in the path tracking thereof from a preprogrammed route to a radially broadened route of the spinning roller rolling-off point (48), are utilized for a subsequent spinning process as the reference path coordinates.

4. Process according to claim 1 or claim 2, characterised in that, from the set of coordinate data obtained by scanning the outer contour (11) of the spinning chuck (12) and fed into the NC or CNC control unit (57), by addition of axial ($\pm$X)- and radial ($\pm$Y)-component data, a set of coordinate data is produced corresponding to the course of reference contour (18) which must be actuated with a predetermined, optionally varying output rate of the reference position value data representing this contour, so that the finished spun part (17) is provided with the predetermined outer contour.

5. Process according to one of claims 1 to 4, characterised in that, from the set of coordinate data obtained by scanning the outer contour (11) of the spinning chuck (12), by adding axial coordinate increments ($\pm \delta X$) and radial coordinate increments ($\pm \delta Y$), a set of coordinate data is produced corresponding to a safety contour extending at a minimum distance from the outer contour (11) of the spinning chuck (12) and within the reference contour of the spun part (17) to be produced, a control signal being triggered during traversal thereof by the rolling-off point (48) of the spinning roller (29), this signal initiating at least one of the following safety measures:
   1. cutting off the coordinate drive units (52 and 53),
   2. reducing the circuit amplification of the follow-up control circuits of the coordinate drive units (52 and 53),
   3. triggering an acoustic and/or optical warning signal.

6. Process according to claim 5, characterised in that, during the scanning of the outer contour (11) of the spinning chuck (12), during a first revolution of the spinning roller (29) extending over the coordinate variation range, one of the two coordinate drive units (52 or 53) is exposed to a constant, low drive pressure whereas the other coordinate drive unit (53 or 52) is operated at a relatively higher circuit amplification and is activated with a defined, preferably time-constant output rate of the coordinate reference value data to be reached in one revolution of the spinning roller (29), and thereafter, during the course of a second revolution of the spinning roller (29) extending over the coordinate variation range, the other of the two coordinate drive units (53 or 52) is exposed to constant, low drive pressure whereas the one coordinate drive unit (53 or 52) is operated with the relatively higher circuit amplification and is activated with a defined, preferably time-constant output rate of the coordinate reference value data to be reached in one revolution of the spinning roller (29), and, during this procedure, the follow-up paths $\Delta S(x)$ and $\Delta S(y)$, respectively, occurring in the control circuit (52 or 53) operated with the higher circuit amplification are permanently detected and stored; and that, from the thus-determined coordinate-dependent follow-up paths $\Delta S(y)$ and $\Delta S(x)$, a location-dependent profile of the path tracking velocity $v_B(x, y)$ of the spinning roller (29) is determined which, as seen over the path motion, corresponds to an at least approximately constant value of the follow-up path

$$\Delta S(x, y) = \sqrt{\Delta S(y)^2 + \Delta S(x)^2} \, .$$

7. Process according to one of claims 1 to 5, characterised in that in at least one revolution performed without a workpiece (19) and at low circuit amplification of the follow-up control circuits of the coordinate drive units (52 and 53), at which the route of the rolling-off point (48) of the spinning roller (29) corresponds to the reference contour configuration (18) of the surface of the spun part (17) facing away from the spinning chuck (12), with the path velocity $V_B$ being kept constant, the location dependency of the follow-up path $\Delta S(x,y)$ is measured by which the actual positions of the pistons (64) of the linear cylinders (42 and 47) of the coordinate drive units (52 and 53) lag behind the reference positions; that, from the resultant location-dependent profile $\Delta S(x,y)$ of the follow-up path $\Delta S$, the location-dependent profile $v_B(x,y)$ of the path velocity $v_B$ is determined corresponding to a follow-up path $\Delta S$ that is constant over the path route; and that, according to this velocity profile $v(x,y)$, the path tracking velocity of the spinning roller (29) is controlled at least in the final revolution of the spinning roller (29).

8. Spinning lathe (10), by means of which a round-blank sheet-metal workpiece (19) is formable, by being pressed against a rotationally drivable spinning chuck (12), into a spun part (17) unilaterally hugging a shaping surface of the spinning chuck (12), with a spinning roller (29) which is supported to be freely rotatable, on a bearing block (32) shiftable by means of respectively one coordinate drive unit (52, 53) into two mutually orthogonal (X- and Y-) directions, about an axis (31) fixed at the block, with position pickups (54, 56) which generate the output signals characteristic for the positions traversed by the spinning roller (29), which signals can be stored as coordinate data by means of an NC or CNC control unit, the serial call-up of which data can be used to control revolving path motions of the spinning roller (29) along the lines of tracking the course of travel of the spinning roller (29) determined during a master spinning process, characterised in that the coordinate drive units (52, 53) comprise follow-up control valves (49, 51) operating with electrically controlled reference value presetting and mechanical actual value acknowledgement, with a measuring system (63) which continuously measures the follow-up path ($\Delta S$) by which the actual position value of the spinning roller (29) differs from its set reference position value, the electronic control unit (57) effecting a comparison of the measured follow-up path ($\Delta S$) with a given threshold value ($\Delta S_{max}$) and, when the measured follow-up path ($\Delta S$) exceeds the threshold value ($\Delta S_{max}$), automatically initiating at least one of the following measures:

1. reduction of the path tracking velocity $v_B$ of the spinning roller (29) by decreasing the control data output rate, and

2. transition to a path routing curve of the spinning roller (29) and thus of its rolling-off point (48) corresponding to an increase of the distance of the spinning roller rolling-off point (48), measured normally to the outer contour (11) of the spinning chuck (12), with respect to its previously governing reference value curve,

until the threshold value ($\Delta S_{max}$) has been exceeded by a defined amount ($\delta S$), the follow-up control valves (49, 51) of the coordinate drive units (52, 53) provided for controlling the path motion components being designed as proportional valves, wherein the deflections of their valve elements (72) from a neutral basic position (0) act as a measure for the follow-up path ($\Delta S$) of the respective coordinate drive control circuit, and the follow-up path measuring system (63) comprises sensor elements which generate electrical output signals characteristic for the deflections of the valve elements (72) and/or of the valve operating members (99) of the follow-up control valves (49, 51) from their basic position (0).

## Revendications

1. Procédé de commande des déplacements circulaires de la molette (29) d'une machine de fluotournage (10) qui permet de transformer une pièce à usiner (19) en tôle en forme de flan circulaire par application contre un mandrin de fluotournage (12) pouvant être entraîné en rotation, en une pièce usinée par fluotournage (17) qui épouse unilatéralement une surface de façonnage du mandrin de fluotournage, la molette étant montée sur un bloc de support (32) qui peut être entraîné à chaque fois au moyen d'une unité d'entraînement en coordonnées (52, 53) dans deux directions (X et Y) orthogonales, de façon à pouvoir tourner librement autour d'un axe (31) solidaire du bloc, et la commande des unités d'entraînement en coordonnées (52, 53) conformées en vérins hydrauliques commandés par soupapes s'effectuant d'après un procédé de reprise de trajectoire (play-back) d'après lequel, au cours d'au moins un processus de fluotournage modèle exécuté par un spécialiste de fluotournage, les données de coordonnées caractéristiques pour les positions alors parcourues par la molette (29) et déterminées à l'aide de transmetteurs de position sont mémorisées dans une unité de commande électronique NC ou CNC (57) et traitées par celle-ci en données de sortie dont l'appel en série permet de commander les unités d'entraînement en coordonnées X et Y dans le sens d'une poursuite de la trajectoire de la molette (29) déterminée lors du processus de fluotournage modèle, le contour du mandrin de fluotournage (12) étant tout d'abord exploré et dans l'unité de commande NC ou CNC (57) étant introduit un jeu de données de coordonnées caractéristiques pour l'allure dudit contour à partir desquelles est déterminée une courbe de sécurité qui marque la limite du rapprochement maximum de la molette (29) au mandrin de fluotournage (12), **caractérisé en ce** que

a) les unités d'entraînement en coordonnées (52 et 53) fonctionnent d'après un procédé de réglage de distance de poursuite utilisant une prédétermination des valeurs de position de consigne commandée électriquement et une répétition mécanique des valeurs effectives;

b) pour l'exploration du contour extérieur (11) du mandrin de fluotournage (12), il est fait appel à la molette (29) et aux unités d'entraînement (52 et 53) prévues pour la commande du déplacement de celle-ci, lesdites unités d'entraînement ne fonctionnant qu'avec une petite fraction du gain maximum utilisable du circuit de réglage, et que

c) au moins pendant la dernière rotation de la molette (29) par laquelle la pièce usinée par fluotournage (17) reçoit sa forme définitive, la distance de poursuite S (erreur de poursuite) correspondant à la différence entre la valeur de position de consigne entrée et la valeur de position effective de la molette (29) est mesurée en permanence, au moins l'une des mesures suivantes étant prise lorsque ladite distance de poursuite S dépasse une valeur de seuil $\Delta S_{max}$ :

1. Abaissement de la vitesse de poursuite de la trajectoire $V_B$ de la molette (29) par la réduction du taux de sortie des données de commande, et

2. Transition à une trajectoire de la molette (29) et donc de son point de roulement (48) qui correspond à une augmentation de la distance entre le point de roulement (48) de la molette et sa valeur de consigne déterminante auparavant, mesurée perpendiculairement par rapport au contour extérieur (11) du mandrin de fluotournage (12)

jusqu'à ce que la valeur de seuil $\Delta S_{max}$ soit dépassée vers le bas d'une valeur $\delta S$ définie.

2. Procédé selon la revendication 1, caractérisé en ce que le positionnement sur les points d'appui prévus pour l'exploration du contour (11) du mandrin de fluotournage (12) se fait de telle façon que, en partant d'une position de la molette (29) dans laquelle celle-ci se trouve à une distance radiale et axiale minimale du point d'appui du mandrin de fluotournage (12) à déterminer, tout d'abord l'une des deux unités d'entraînement en coordonnées, par exemple l'unité d'entraînement X (52), est commandée, pendant que l'unité d'entraînement Y (53) est arrêtée, pour effectuer une course d'exploration incrémentale $\Delta X$, puis arrêtée à son tour, après quoi l'autre unité d'entraînement en coordonnées, l'unité d'entraînement Y (53), est amenée - radialement - à la vitesse prédéterminée $v_y$ jusqu'à l'entrée en contact de la molette (29) avec le mandrin de fluotournage (12) et que, dès que la distance de poursuite $\Delta Sy$ qui augmente avec l'entrée en contact de la molette (29) avec le mandrin de fluotournage (12) atteint une valeur $\Delta S_{ym}$ prédéterminée, la sortie de données de valeur de consigne est terminée, l'unité d'entraînement Y (53) est arrêtée et la valeur de consigne prise en compte pour le réglage sur cette position diminuée de la distance de poursuite $\Delta S_{ym}$ est mémorisée en tant que valeur de coordonnée Y pour le point d'appui du contour, après quoi l'unité d'entraînement Y (53) est commandée avec la valeur de consigne de la position Y associée au point d'appui et arrêtée dans cette position et la molette (29) est déplacée de cette position par la commande de l'unité d'entraînement X (52), puis amenée à son tour à la vitesse constante $v_x$ vers le point d'appui avec la coordonnée Y désormais définie et que, dès que la distance de poursuite $\Delta S_x$ a atteint dans la direction X une valeur correspondant à la valeur $\Delta S_{ym}$, la valeur de consigne $X_s$ de la commande diminuée de la distance de poursuite $\Delta S_{xm}$ mesurée dans la direction X est à nouveau mémorisée en tant que valeur de coordonnée X du point d'appui.

3. Procédé selon l'une des revendications 1 ou 2, caractérisé en ce que les coordonnées de trajectoire d'une rotation de la molette (29) au cours de laquelle s'est effectuée une transition d'une trajectoire préprogrammée à une trajectoire du point de roulement (48) de la molette élargie dans le sens radial, sont utilisées comme coordonnées de trajectoire de consigne pour un processus de fluotournage suivant.

4. Procédé selon l'une des revendications 1 ou 2, caractérisé en ce que, à partir du jeu de données de coordonnées obtenu par l'exploration du contour (11) du mandrin de fluotournage (12) et introduit dans l'unité de commande NC ou CNC (57), est généré, par addition de données de composantes axiales ($\pm$ X) et radiales ($\pm$ Y) , un jeu de données de coordonnées qui correspond à l'allure d'un contour de consigne (18) sur lequel le réglage doit être effectué avec un taux de sortie prédéterminé, éventuellement variable, des données de valeurs de position de consigne qui le représentent, pour que la pièce terminée (17) usinée par fluotournage présente le contour extérieur prédéterminé.

5. Procédé selon l'une des revendications 1 à 4, caractérisé en ce que, à partir du jeu de données de coordonnées obtenu par l'exploration du contour extérieur (11) du mandrin de fluotournage (12), est généré, par addition d'incréments de coordonnées axiaux ($\pm \delta X$) et d'incréments de coordonnées radiaux ($\pm \delta Y$), un jeu de données de coordonnées correspondant à un contour de sécurité qui s'étend à une distance minimale du contour extérieur (11) du mandrin de fluotournage (12) et à l'intérieur du contour de consigne de la pièce (17) à usiner par fluotournage, et dont le dépassement par le point de roulement (48) de la molette (29) provoque le déclenchement d'un signal de commande lequel déclenche au moins l'une des mesures de sécurité suivantes :

    1. Arrêt des unités d'entraînement en coordonnées (52 et 53),

    2. Diminution du gain des circuits de réglage de distance de poursuite des unités d'entraînement en coordonnées (52 et 53),

    3. Déclenchement d'un signal avertisseur acoustique et/ou optique.

**6.** Procédé selon la revendication 5, caractérisé en ce que, lors de l'exploration du contour extérieur (11) du mandrin de fluotournage (12), au cours d'une première rotation de la molette (29) sur la plage de variation de coordonnées, l'une des deux unités d'entraînement en coordonnées (52 ou 53) est alimentée avec une faible pression d'entraînement constante, tandis que l'autre unité d'entraînement en coordonnées (53 ou 52) est commandée avec un gain de circuit relativement plus grand et avec un taux de sortie des données de coordonnées de valeurs de consigne défini, de préférence constant dans le temps, qui doivent être atteintes en une rotation de la molette (29), et qu'ensuite, au cours d'une seconde rotation de la molette (29) couvrant la plage de variation de coordonnées, l'autre des deux unités d'entraînement en coordonnées (53 ou 52) est alimentée avec une faible pression d'entraînement constante, alors que la première unité d'entraînement en coordonnées (53 et respectivement 52) fonctionne avec le gain de circuit relativement plus élevé et est commandée avec un taux de sortie des données de coordonnées de valeurs de consigne défini, de préférence constant dans le temps, qui doivent être atteintes en une rotation de la molette (29), que les distances de poursuite S(x) et respectivement $\Delta$S(y) survenant dans le circuit de réglage (52 ou 53) fonctionnant avec le gain de circuit plus élevé, sont alors détectées et mémorisées en permanence, et que, à partir des distances de poursuite $\Delta$S(y) et $\Delta$S(x) ainsi déterminées en fonction des coordonnées, est établi un profil de la vitesse de poursuite de la trajectoire $V_B$ (x, y) de la molette (29) qui, considéré sur la trajectoire, correspond à une valeur au moins approximativement constante de la distance de poursuite

$$S(x,y) \; = \; \sqrt{\Delta S(y)^2 \; + \; \Delta S(x)^2}.$$

**7.** Procédé selon l'une des revendications 1 à 5, caractérisé en ce que, au cours d'au moins une rotation effectuée sans pièce à usiner (19) et avec un faible gain du circuit de réglage de poursuite des unités d'entraînement en coordonnées (52 et 53), pour laquelle la trajectoire du point de roulement (48) de la molette (29) correspond à l'allure du contour de consigne (18) de la surface de la pièce (17) usinée par fluotournage détournée du mandrin de fluotournage (12), avec une vitesse $v_B$ sur la trajectoire stabilisée, on mesure la distance de poursuite $\Delta$S(x,y) en fonction du lieu de laquelle les positions effectives des pistons (64) des vérins linéaires (42 et 47) des unités d'entraînement en coordonnées (52 et 53) retardent par rapport aux positions de consigne, que l'on détermine, à partir du profil $\Delta$S(x,y) de la distance de poursuite $\Delta$S en fonction du lieu qui en résulte, le profil $v_B$ (x,y) de la vitesse sur la trajectoire $v_B$ en fonction du lieu lequel correspond, sur l'ensemble de la trajectoire, à une distance de poursuite $\Delta$S constante, et que ce profil de vitesse v(x,y) est utilisé pour commander au moins pendant la dernière rotation de la molette (29) la vitesse de poursuite de la trajectoire de ladite molette (29).

**8.** Machine de fluotournage (10) permettant de transformer une pièce à usiner (19) en tôle en forme de flan circulaire par application contre un mandrin de fluotournage (12) pouvant être entraîné en rotation, en une pièce (17) usinée par fluotournage qui épouse unilatéralement une surface de façonnage du mandrin de fluotournage (12), comprenant une molette (29) montée sur un bloc de support (32) qui peut être entraîné à chaque fois au moyen d'une unité d'entraînement en coordonnées (52, 53) conformée en vérins hydrauliques commandés par soupape, dans deux directions (X et Y) orthogonales, de façon à pouvoir tourner librement autour d'un axe (31) solidaire du bloc, des transmetteurs de position (54, 56) qui génèrent des signaux de sortie caractéristiques pour les positions parcourues par la molette (29), lesquels peuvent être mémorisés en tant que données de coordonnées au moyen d'une unité de commande NC ou CNC (57) et utilisés par appel en série pour la commande de déplacements circulaires de la molette (29) dans le sens d'une poursuite d'une trajectoire de la molette (29) déterminée au cours d'un processus de fluotournage modèle, **caractérisée en ce** que les unités d'entraînement en coordonnées (52, 53) comprennent des vannes-pilotes de poursuite (49, 51) qui fonctionnent avec une prédétermination de la valeur de position de consigne commandée électriquement et une répétition mécanique des valeurs de position effectives, un système de mesure (63) qui mesure en permanence la distance de poursuite ($\Delta$S) de laquelle la valeur de position effective de la molette (29) diffère de la valeur de position de consigne entrée, l'unité de commande électronique (57) effectuant une comparaison de la distance de poursuite ($\Delta$S) mesurée avec une valeur de seuil ($S_{max}$) prédéterminée et déclenchant automatiquement au moins l'une des mesures suivantes au cas où la distance de poursuite (S) devait dépasser la valeur de seuil ($\Delta S_{max}$) :

1. Abaissement de la vitesse de poursuite de la trajectoire $v_B$ de la molette (29) par la réduction du taux de sortie des données de commande, et

2. Transition à une trajectoire de la molette (29) et donc de son point de roulement (48) qui correspond à une augmentation de la distance entre le point de roulement (48) de la molette et sa valeur de consigne déterminante auparavant, mesurée perpendiculairement par rapport au contour extérieur (11) du mandrin de fluotournage (12),

jusqu'à ce que la valeur de seuil ($\Delta S_{max}$) soit dépassée vers le bas d'une valeur ($\delta$S) définie, les vannes-pilotes de poursuite (49, 51) des unités d'entraînement en coordonnées (52, 53) prévues pour la commande des composantes de trajectoire étant conformées en vannes proportionnelles pour lesquelles les déviations des corps de vanne (72) à partir d'une position de base (0) constituent un critère pour la distance de poursuite ($\Delta$S) du circuit de réglage de l'entraînement en coordonnées respectif, et que le système de mesure de distance de poursuite (63) comprend des éléments de détection qui génèrent des signaux de sortie électriques caractéristiques pour les déviations des corps de vanne (72) et/ou des organes de commande de vanne (99) des vannes-pilotes de poursuite (49, 51) à partir de la position de base (0) de celles-ci.

Fig.1

Fig. 2

Fig. 4

Fig. 5

25